# EUROPÄISCHE PATENTSCHRIFT

(11) **EP 0 263 951 B1**
(45) Veröffentlichungstag und Bekanntmachung des Hinweises auf die Patenterteilung: **15.06.1994**
(21) Anmeldenummer: 87112598.5
(22) Anmeldetag: 29.08.1987
(51) Int. Cl.: C09B 35/08, C09B 67/22

(54) **Disazoverbindungen und diese Disazoverbindungen enthaltende Zubereitungen**
Disazo compounds and compositions containing them
Composés disazoiques et compositions les contenant

(30) Priorität: 05.09.1986 DE 3630278
(43) Veröffentlichungstag der Anmeldung: 20.04.1988
(73) Patentinhaber: BASF Lacke + Farben AG, 48165 Münster-Hiltrup (DE)
(72) Erfinder: Ruff, Wolfgang, Dr., D-7000 Stuttgart 61 (DE); Liedek, Egon, Dr., D-7300 Esslingen (DE); Berger, Gerhard, Dr., D-7000 Stuttgart (DE); Sonneborn, Hans Walter, D-7070 Schwaebisch Gmuend (DE)
(74) Vertreter: Michaelis, Wolfgang, Dr.

(56) Entgegenhaltungen:
- EP-A- 0 076 024
- FR-A- 2 084 544
- CHEMICAL ABSTRACTS, Band 94, Nr. 12, März 1981, Seite 87, Zusammenfassung Nr. 85665j, Columbus, Ohio, US; & JP-A-80 135 165 (DAINICHISEIKA COLOR AND CHEMICALS MFG CO., LTD) 21-10-1980

## Beschreibung

Es ist bekannt, Pigmenten zur Verbesserung ihrer Eigenschaften diesen Pigmenten ähnlich aufgebaute Additive zuzugeben. Durch solche Zusätze werden die coloristischen Eigenschaften wie Farbstärke, Lasur und Glanz bei der Anwendung der Pigmente in Druckfarben verbessert.

Bei den Disazopigmenten können solche Pigment-Additiv-Gemische direkt bei der Synthese durch Mischkupplung auf ein Gemisch der Kupplungskomponenten hergestellt werden (DE-B 15 44 507, 12 89 931 und 15 44 534).

Weiterhin sind Mischkupplungen zu Pigmentgemischen bekannt, bei denen als Kupplungskomponente ein Gemisch aus der neutralen Kupplungskomponente und einer geringen Menge einer eine saure Gruppe enthaltenden Kupplungskomponente verwendet wird (DE-A 20 12 152). In der EP-A-76 024 sind ebenfalls Pigmentgemische beschrieben, die 30 bis 70 %, insbesondere 40 bis 60 %, einer unsymmetrischen, nur eine saure Endgruppe aufweisenden Disazoverbindung enthalten.

Weiterhin ist die Herstellung von Gemischen aus Pigmenten und konstitutionell ähnlichen Verbindungen, die saure Gruppen tragen, durch Mischkupplung eines tetrazotierten Gemisches aus einem 4,4'-Diaminodiphenyl und einer saure Gruppen enthaltenden Verbindung mit 2 diazotierbaren Aminogruppen wie 4,4'-Diaminodiphenyldisulfonsäure oder 4,4'-Diaminostilbendisulfonsäure auf Acetoacetarylide, 1-Arylpyrazolone oder Naphthol-AS-Komponenten bekannt (DE-C 21 22 521; DE-A 33 29 846).

Eine weitere Variante zur Verbesserung der Pigmenteigenschaften besteht darin, daß den Pigmenten Zusätze zugegeben werden, die sich konstitutionell nicht von den zu verbessernden Pigmenten ableiten (DE-A 34 34 379).

Nach den Angaben in der Literatur werden durch diese Additive die anwendungstechnischen Eigenschaften der Pigmente wie Farbstärke, Glanz, Temperaturstabilität, Dispergierbarkeit und Fließverhalten in Bindemitteln verbessert.

In der letzten Zeit werden im Gelbbereich des Skalendrucks vorzugsweise hochgeharzte Pigmente verwendet, deren Harzgehalt 40 Gew.% und darüber betragen kann. Diese "geharzten Pigmente" zeichnen sich vor allem durch hohe Lasur und trotz des hohen Harzgehaltes durch eine sehr hohe Farbstärke sowie hervorragenden Glanz und Dispergierverhalten aus. Ein Nachteil dieser hochgeharzten Pigmente ist, daß beim Anreiben dieser Pigmente in modernen Dispergiermaschinen, z.B. in schnellaufenden Rührwerkskugelmühlen die Farbstärke und die Lasur zurückgehen. Dies ist eine Folge der Kristallisation der Pigmente unter der beim Anreiben auftretenden Temperaturerhöhung.

Aufgabe der vorliegenden Erfindung war es, Disazoverbindungen bereitzustellen, die als Zusätze zur Stabilisierung von Azo-, insbesondere von Disazopigmenten geeignet sind.

Es wurde gefunden, daß als solche Zusätze geeignete Disazoverbindungen vorliegen, wenn diese unsymmetrisch sind und eine der Kupplungskomponenten eine saure Gruppe trägt.

Dementsprechend betrifft die Erfindung Disazoverbindungen auf der Basis von 4,4'-Diaminodiphenylverbindungen, die mindestens 80 Gew.% einer Disazoverbindung der allgemeinen Formel

A - N = N - Z - N = N - B (I)

enthalten, in der
- Z: für 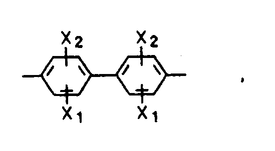 worin X₁ und X₂ unabhängig voneinander Wasserstoff, Chlor, Brom, Methoxy oder Methyl bedeuten und die Substituenten X₁ und X₂ symmetrisch angeordnet sind,
- A: für einen Rest der Kupplungskomponenten 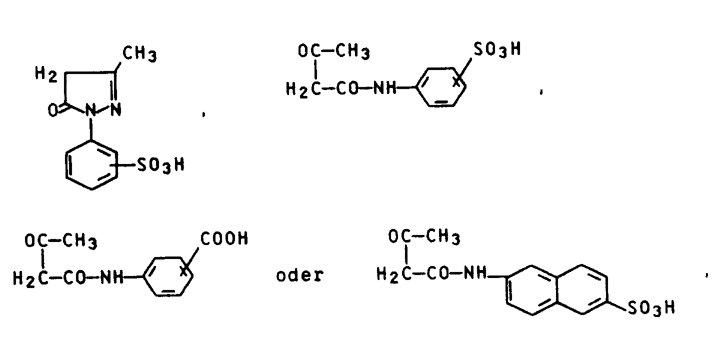 wobei die Benzolreste und der Naphthalinrest gegebenenfalls durch Chlor, Methyl und/oder Methoxy ein- oder zweifach substituiert sind und
- B: für einen Rest der Kupplungskomponenten 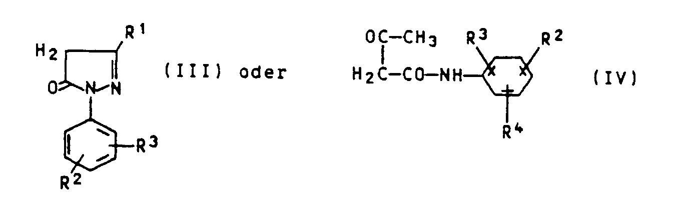 stehen, worin R¹ Methyl oder Carbo-C₁- bis C₄-alkoxy und R², R³ und R⁴ unabhängig voneinander Wasserstoff, Methyl, Methoxy oder Chlor bedeuten.

Die erfindungsgemäßen Disazoverbindungen bewirken bei Zusatz von 0,5 bis 20 Gew.% zu hochgeharzten Azo-, insbesondere Disazopigmenten nicht nur eine deutliche Steigerung der coloristischen Eigenschaften, sondern auch eine entscheidende Verbesserung der Temperaturstabilität. Dieser positive Effekt wird auch bei den weniger stark geharzten Pigmenten und bei den harzfreien Pigmenten erzielt. Jedoch ist der Effekt bei den hochgeharzten Pigmenten wegen ihrer hohen Lasur besonders auffallend. Die Wirkung der Disazoverbindungen (I) übertrifft die der bisher bekannten Additive deutlich.

Als Disazoverbindungen (I) kommen solche in Betracht, die sich von Diaminen der Formel 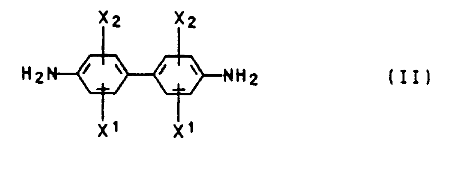
ableiten. In der Formel stehen X¹ und X² unabhängig voneinander für Wasserstoff, Chlor, Brom, Methoxy oder Methyl, wobei die Substituenten X₁ und X₂ symmetrisch angeordnet sind.

Als Diamine (II) sind im einzelnen z.B. zu nennen: 4,4'-Diaminodiphenyl, 4,4'-Diamino-3,3'-dichlordiphenyl, 4,4'-Diamino-3,3'-dibromdiphenyl, 4,4'-Diamino-3,3'-dimethoxydiphenyl, 4,4'-Diamino-3,3'-dimethyldiphenyl, 4,4'-Diamino-3,3',5,5'-tetrachlordiphenyl, 4,4'-Diamino-2,2',5,5'-tetrachlordiphenyl, 4,4'-Diamino-3,3'-dichlor-5,5'-dibromdiphenyl.

Bevorzugt sind Diazoverbindungen (I), die sich vom 4,4'-Diamino-3,3'-dichlordiphenyl, 4,4'-Diamino-3,3'-dimethoxydiphenyl, 4,4'-Diamino-3,3'-dimethyldiphenyl, 4,4'-Diamino-3,3',5,5'-tetrachlordiphenyl oder 4,4'-Diamino-2,2',5,5'-tetrachlordiphenyl ableiten. Von diesen sind die Verbindungen (I) mit 4,4'-Diamino-3,3'-dichlordiphenyl als Diazokomponente besonders bevorzugt.

Als Kupplungskomponenten A-H sind im einzelnen z.B. zu nennen: 1-(Sulfophenyl)-3-methylpyrazolon-5 und Acetoacet-sulfoanilid, worin die Sulfogruppen in 2-, 3- oder 4-Stellung am Phenylrest stehen und die Phenylreste durch 1 oder 2 Chlor, durch Methyl oder Chlor und Methyl substituiert sein können, Acetoacet-6-sulfonaphthyl-2-amid und Acetoacet-carboxy-anilid, wobei die Carboxylgruppe in 2-, 3- oder 4-Stellung stehen kann. Für die Kupplungskomponente A-H sind im einzelnen z.B. zu nennen: 1-(3-Sulfophenyl)-3-methylpyrazol-5-on, 1-(4-Sulfophenyl)-3-methylpyrazol-5-on, 1-(2-Chlor-4-sulfophenyl)-3-methylpyrazol-5-on, 1-(2-Chlor-5-sulfophenyl)-3-methylpyrazol-5-on, 1-(2,5-Dichlor-4-sulfophenyl)-3-methylpyrazol-5-on, Acetoacetaminobenzol-3-und -4-sulfonsäure, Acetoacetamino-4-methylbenzol-2-sulfonsäure, Acetoacetamino-4-methyl-5-chlorbenzol-2-sulfonsäure, Acetoacetamino-4-chlor-5-methylbenzol-2-sulfonsäure, Acetoacetaminobenzol-3- und -4-carbonsäure. Von den genannten Kupplungskomponenten sind die 3- und 4-Sulfophenylpyrazolone und die Acetoacetamino-benzol-3- und 4-sulfonsäuren bevorzugt.

Für die Kupplungskomponente B-H kommen die der Formeln (III) und (IV) aus der Reihe des 1-Phenyl-pyrazolon-5 und des Acetoacetanilids in Betracht.

Im einzelnen sind z.B. für B-H zu nennen: Acetoacetanilid, Acetoacet-o-toluidid, Acetoacetamino-2,4-dimethylbenzol, Acetoacetamino-2,5-dimethoxy-4-chlorbenzol, Acetoacetamino-2-methoxybenzol, 1-Phenyl-3-methylpyrazol-5-on, 1-(4'-Methylphenyl)-3-methylpyrazol-5-on und 1-Phenyl-3-carboethoxypyrazol-5-on.

Für B-H sind Acetoacetanilid und die sich davon ableitenden Kupplungskomponenten (IV) besonders bevorzugt.

Als Disazoverbindungen (I) sind im einzelnen z.B. zu nennen

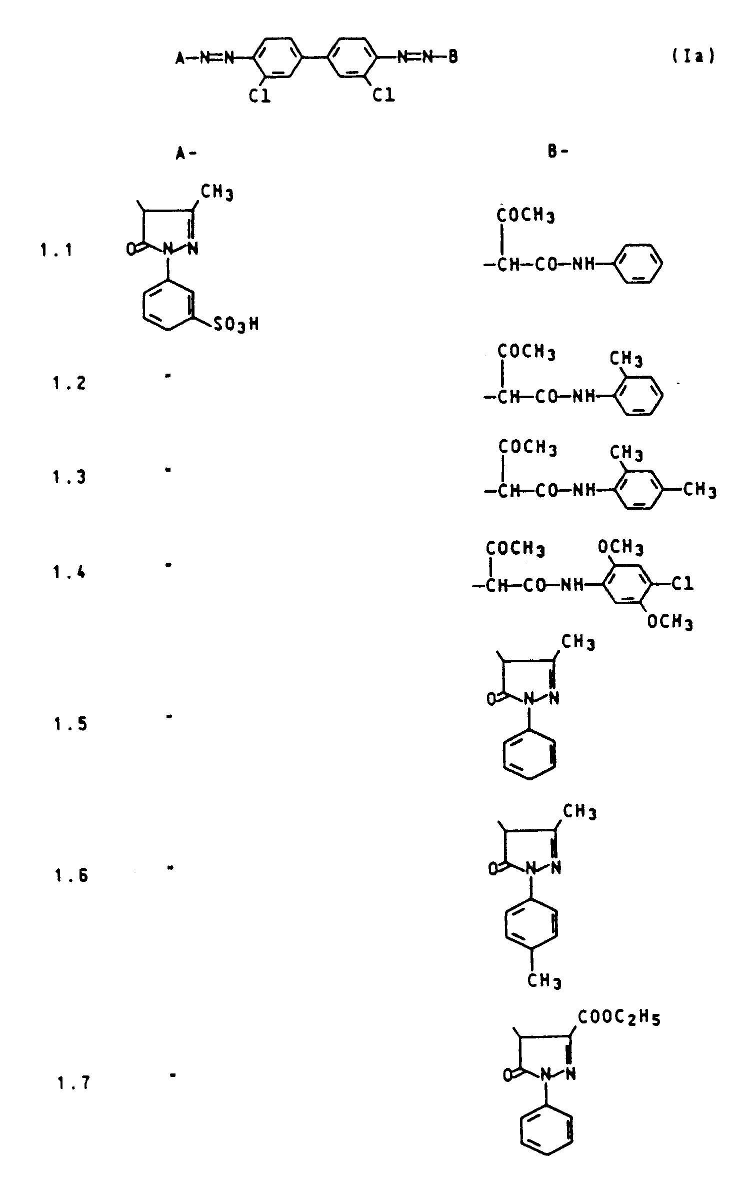

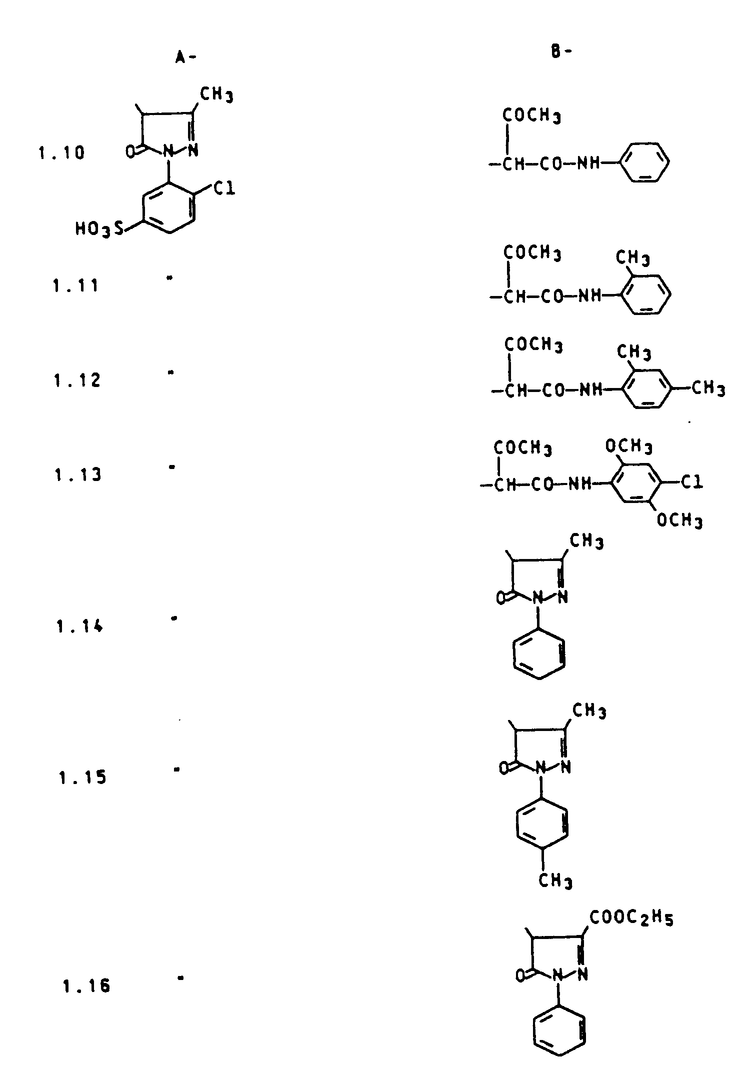

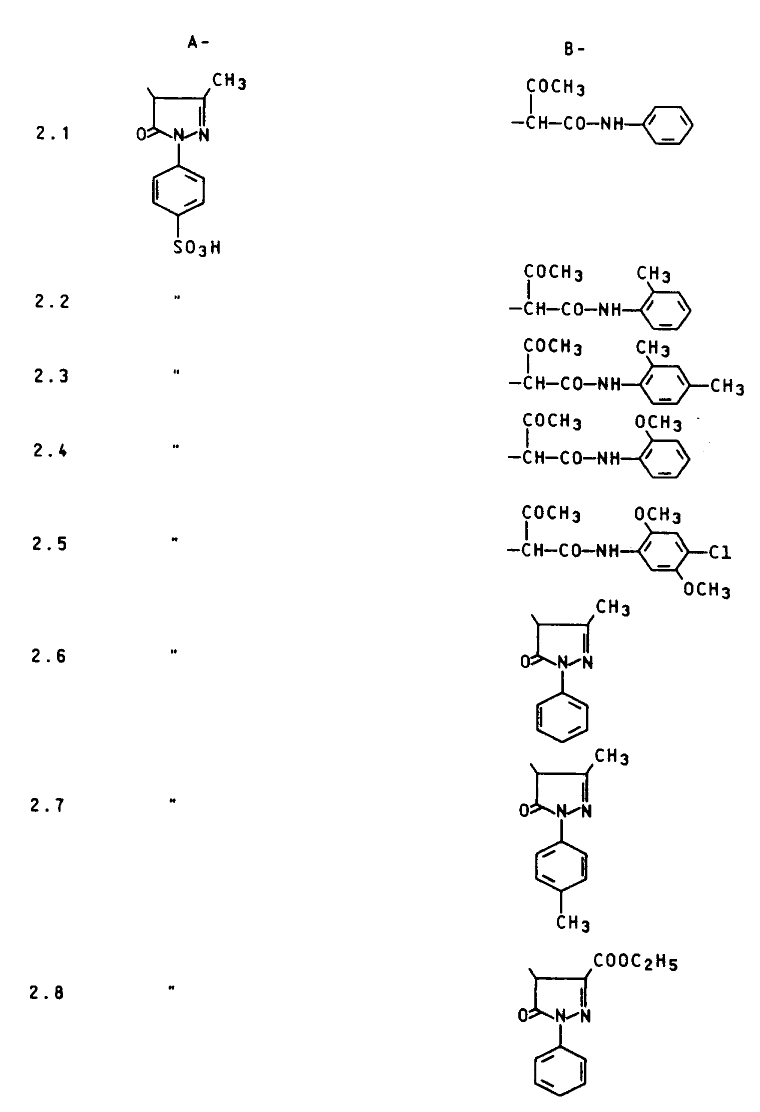

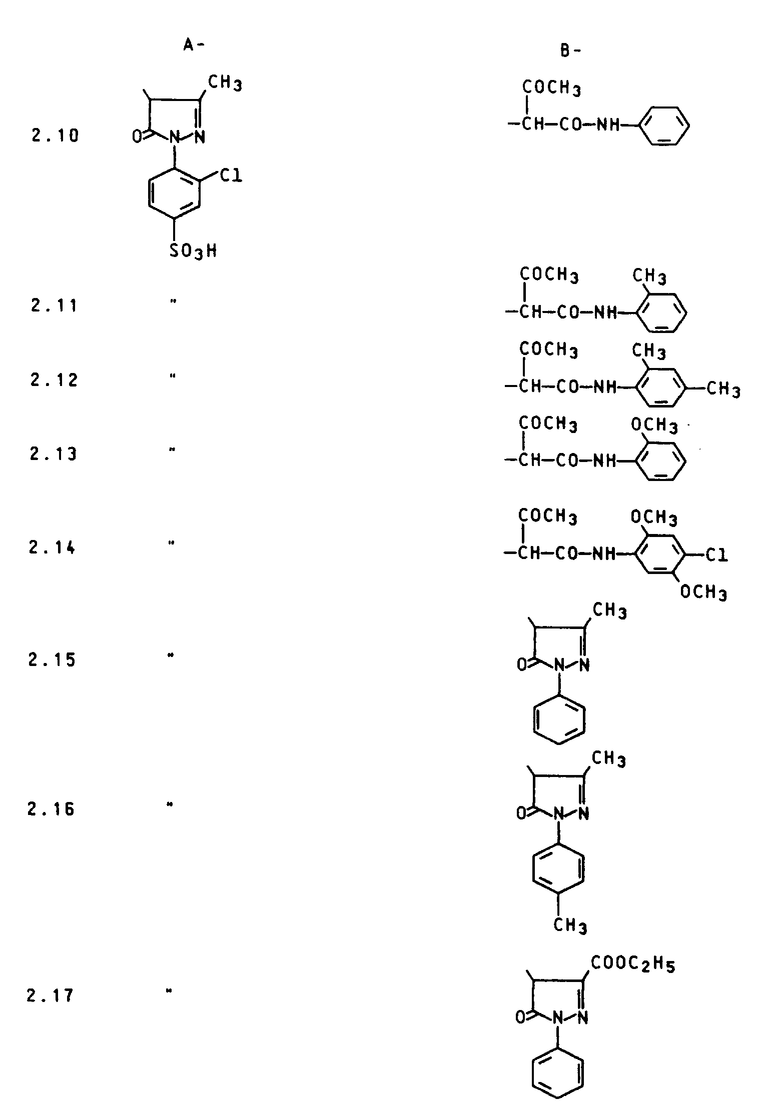

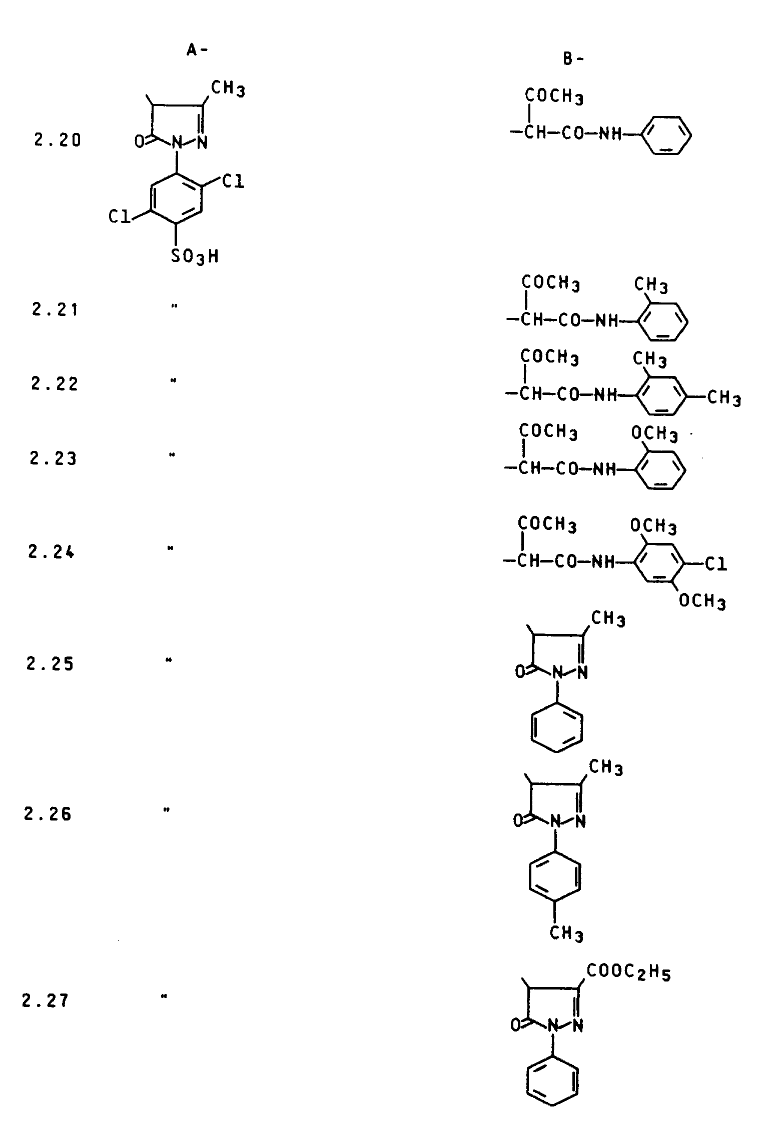

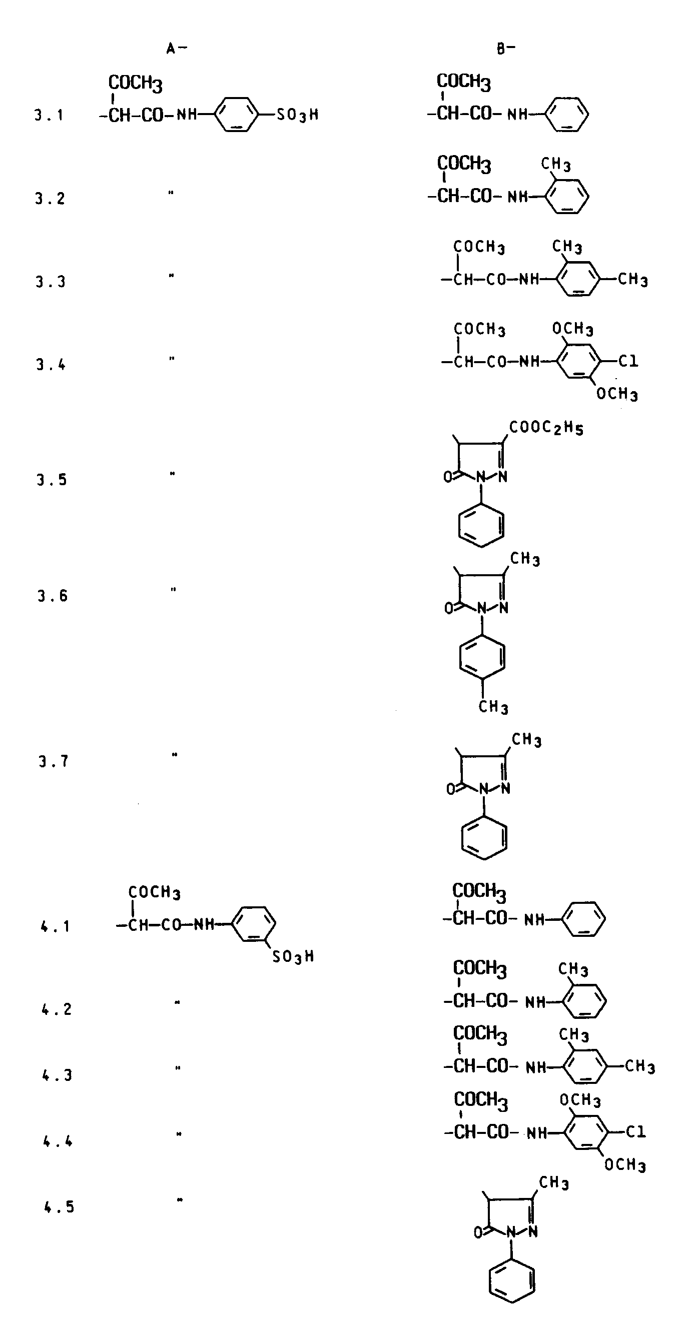

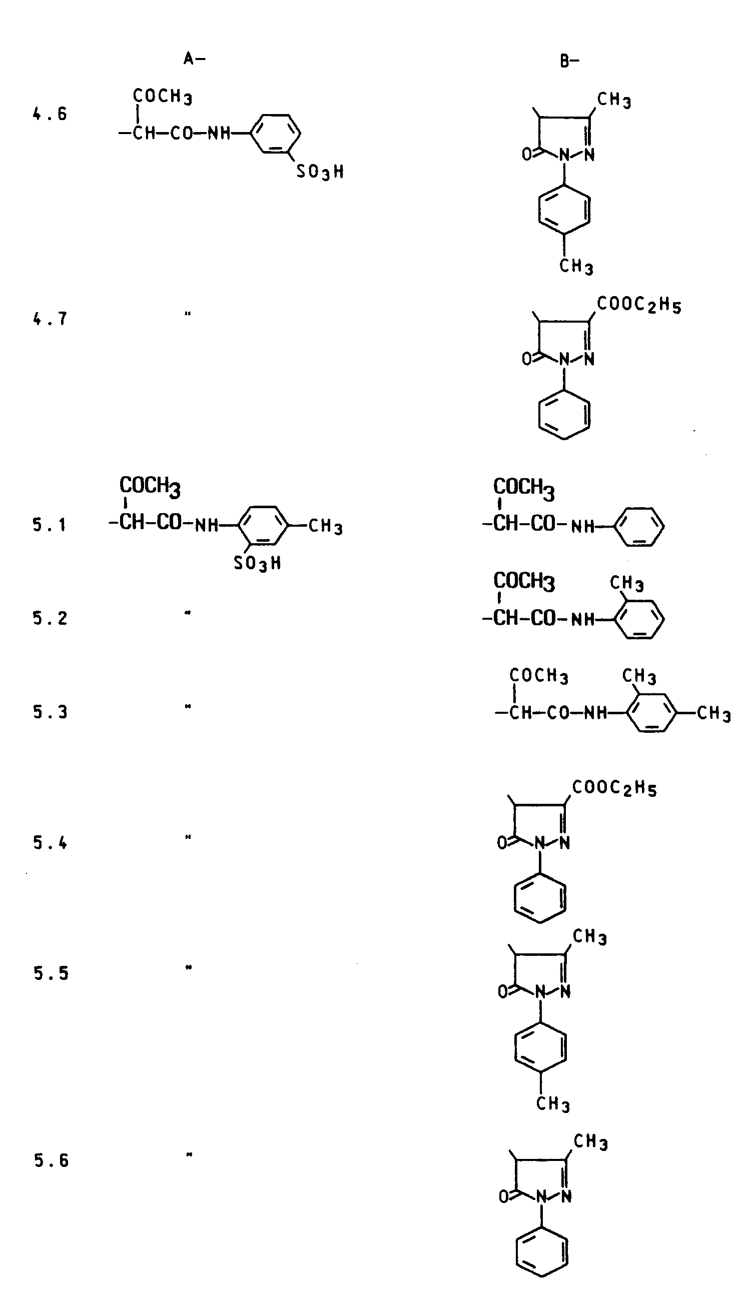

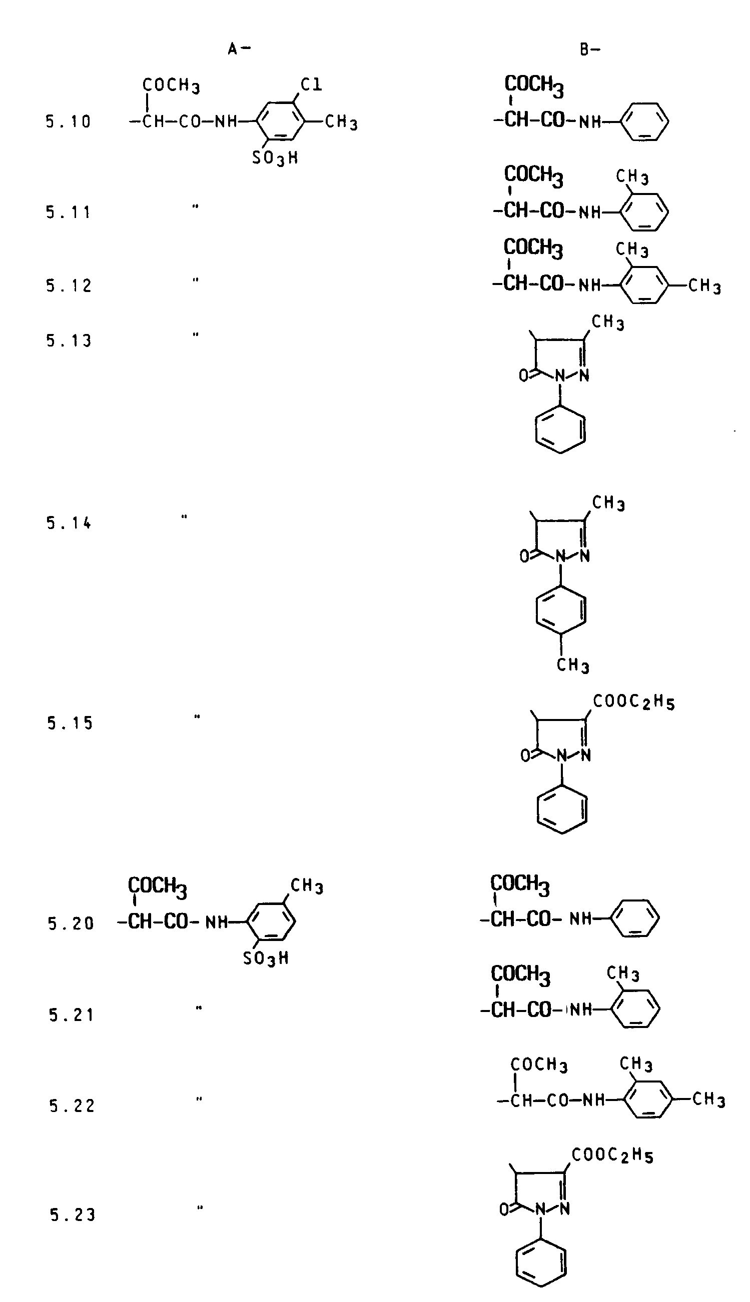

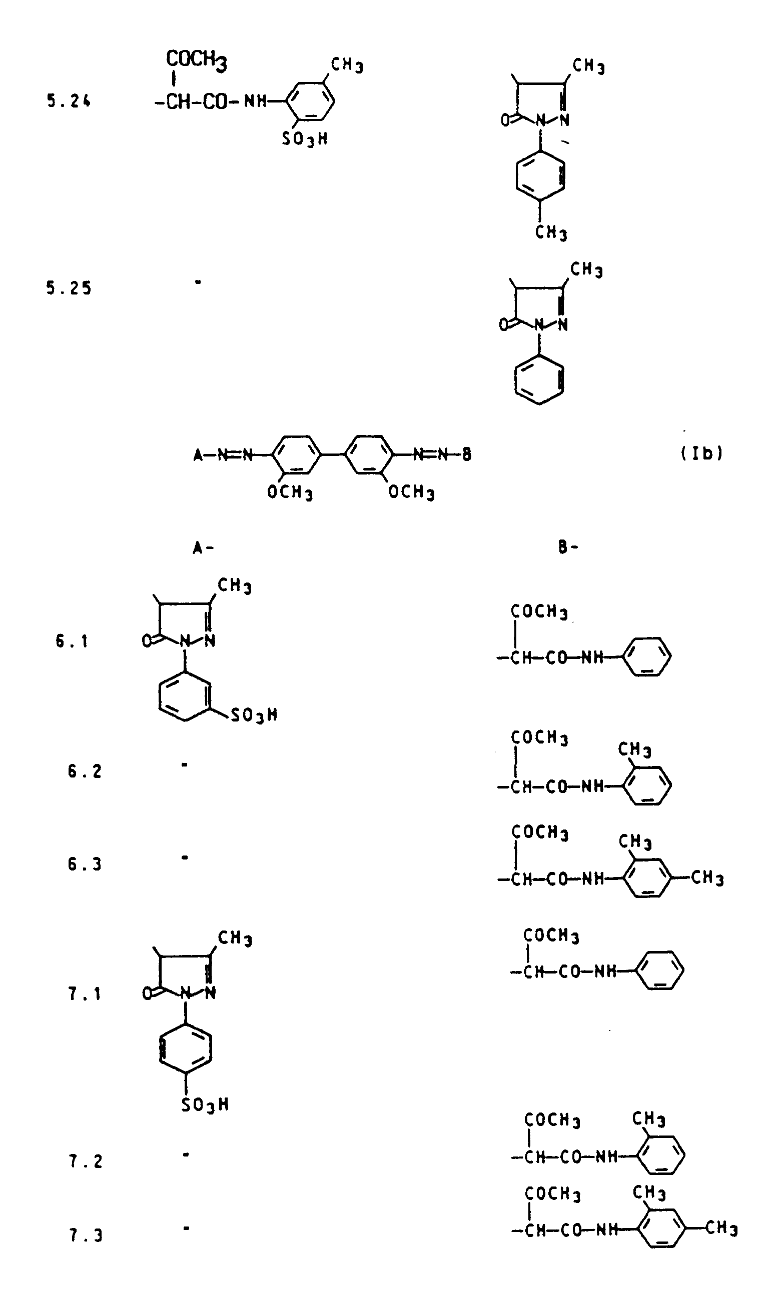

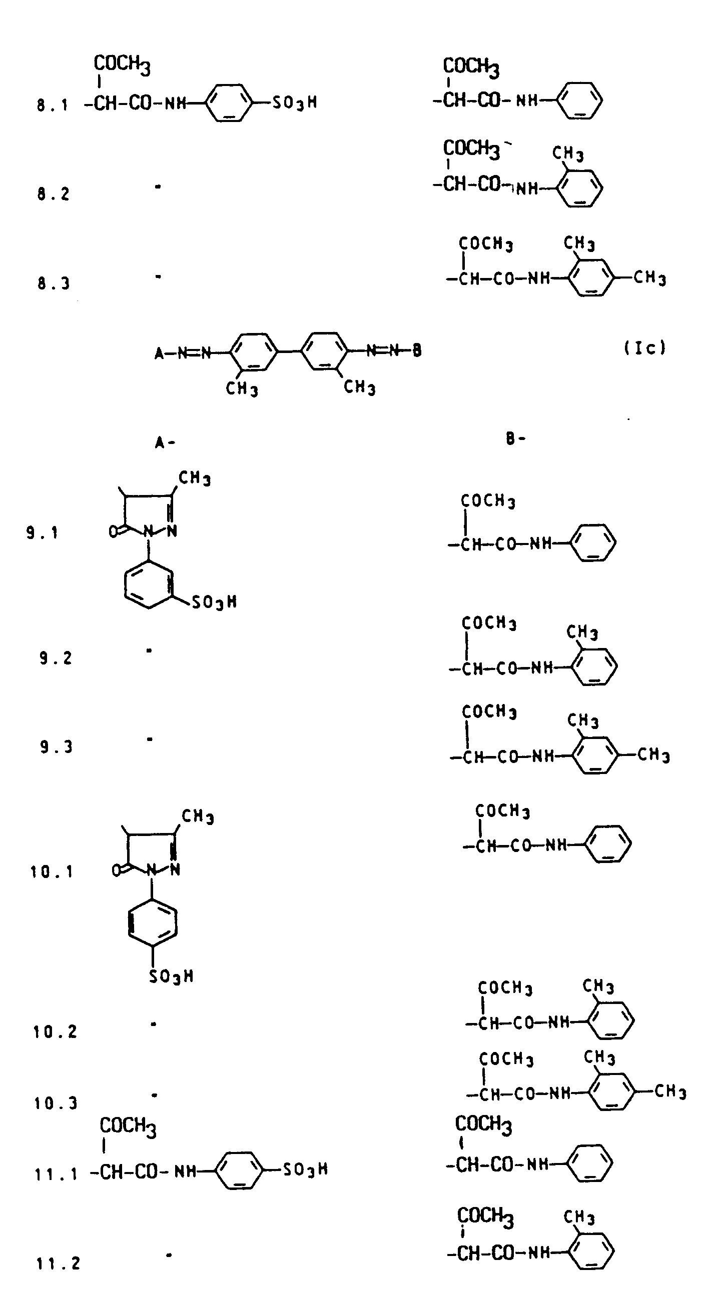

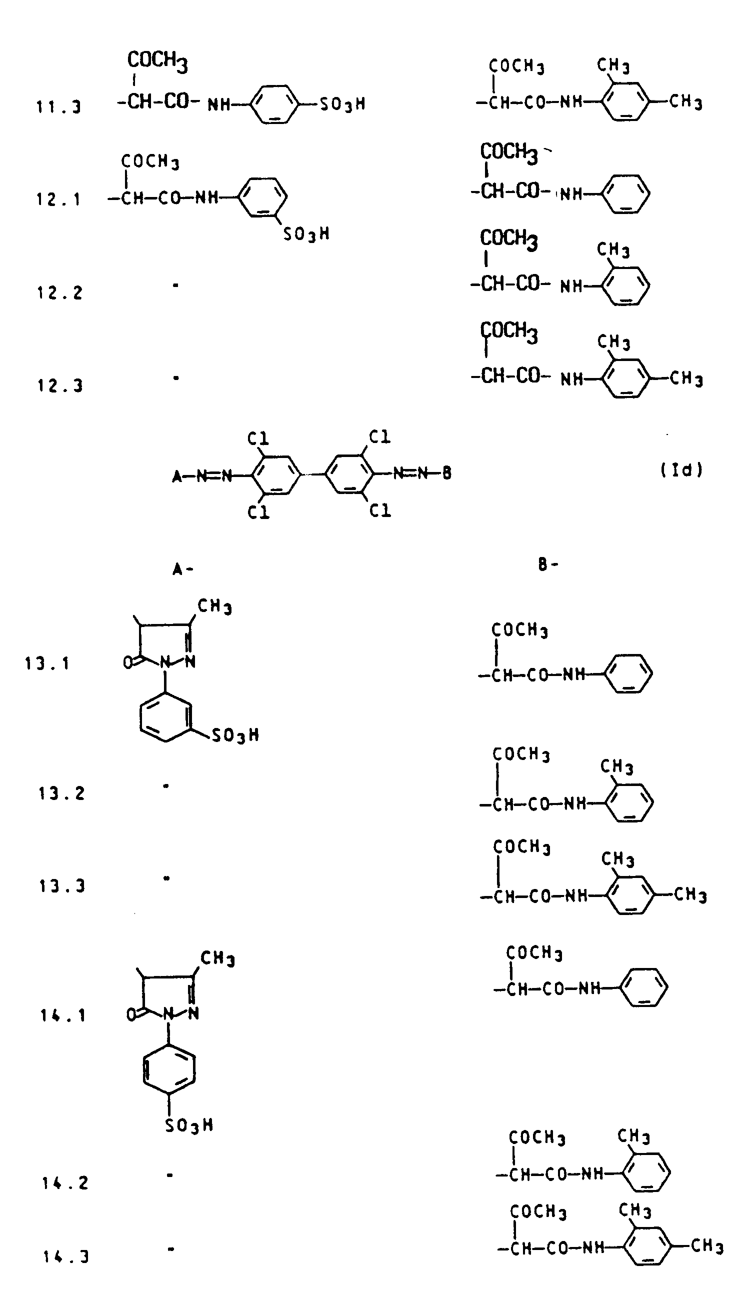

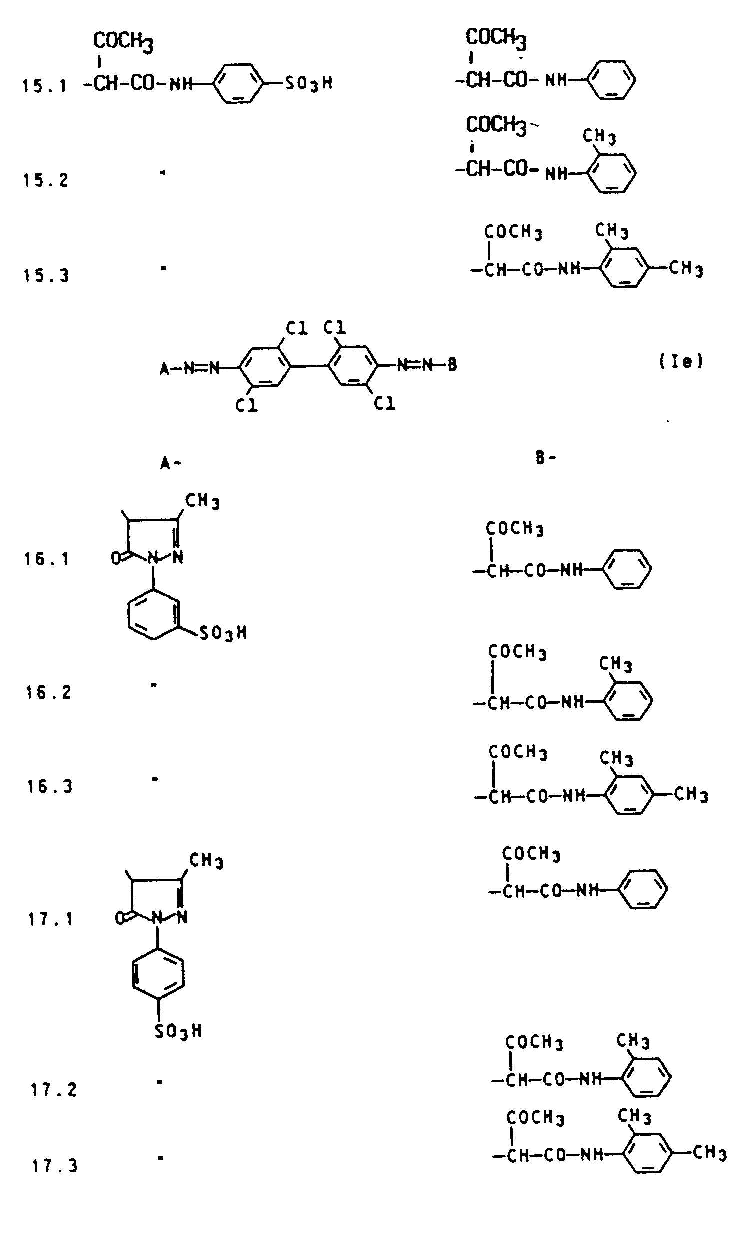

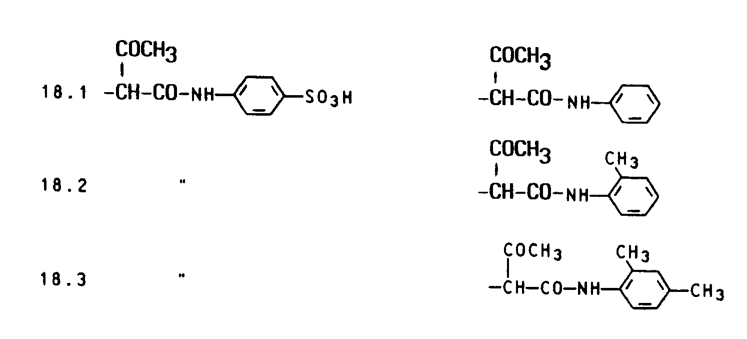

Von den oben genannten Disazoverbindungen sind die der Formel (Ia) unter 1.1 bis 1.3, 2.1 bis 2.3, 3.1 bis 3.3 und 4.1 bis 4.3 genannten besonders hervorzuheben, da diese eine besonders hohe stabilisierende Wirkung aufweisen.

Die Disazoverbindungen (I) werden im Prinzip analog dem in der FR-PS 1 002 512 beschriebenen Verfahren durch Kupplung hergestellt. Dabei wird so verfahren, daß man zu der mineralsauren Lösung des tetrazotierten Diamins der Formel H₂N-Z-NH₂, worin Z die oben angegebene Bedeutung hat, je Mol tetrazotiertem Diamin 1 Mol einer alkalischen Lösung der Kupplungskomponente AH, welche eine saure Gruppe trägt, gibt, wobei das Gemisch mineralsauer bleiben muß. Diese mineralsaure Suspension, die nach der Zugabe von AH im wesentlichen einseitig gekuppeltes Diazoniumsalz enthält, wird dann langsam auf ungefähr pH 4 gepuffert und dann mit etwa 1 Mol einer alkalischen Lösung der Kupplungskomponente BH versetzt, wobei im wesentlichen die unsymmetrische Disazoverbindung (I) entsteht.

Für die gezielte Synthese der unsymmetrischen Disazoverbindungen (I) ist entscheidend, daß in der ersten Stufe die Kupplung des tetrazotierten Diamins mit der die saure Gruppe enthaltenden Kupplungskomponente AH im Verhältnis 1:1 Mol in der mineralsauren Lösung unter Bildung einer in dem Reaktionsmedium schwerlöslichen Monoazo-diazoniumverbindung 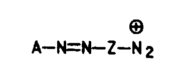
erfolgt. Nach Beendigung der Kupplung der ersten Stufe tritt im Auslauf der flüssigen Phase eines auf Filterpapier aufgebrachten Tropfens der Suspension mit β-Naphthol nur noch eine schwache Farbreaktion mit nicht umgesetztem bisdiazotierten Diamin auf. Nach Zugeben von 5 % der für die zweite Stufe erforderlichen Menge von BH zur auf pH 4 abgepufferten Suspension tritt im Auslauf mit β-Naphthol keine Farbreaktion mehr auf.

In der anschließenden zweiten Stufe erfolgt dann die Kupplung mit B-H zur unsymmetrischen Disazoverbindung (I).

Der zweite Reaktionsschritt, d.i. die Kupplung des Azo-diazoniumsalzes auf BH kann auch in der Weise erfolgen, daß man das einseitig gekuppelte Diazoniumsalz zu einer vorgelegten gepufferten Suspension der Komponente BH gibt, deren pH-Wert auf 4 bis 5 eingestellt ist und die soviel Puffer enthält, daß nach der Zugabe der mineralsauren Suspension der pH-Wert im Reaktionsgemisch nicht unter 4 absinkt. Man kann auch so verfahren, daß man den pH-Wert in der vorgelegten Suspension von BH durch gleichzeitiges Zugeben von Pufferlösung zwischen 4 und 5 hält.

Eine weitere Variante zur gezielten Synthese der unsymmetrischen Disazoverbindung (I) besteht darin, daß in der ersten Stufe 1 Mol der Kupplungskomponente AH mit mehr als 1 Mol, z.B. 2 bis 3 Mol des tetrazotierten Diamins (II) in der oben angegebenen Weise umgesetzt wird. Die erhaltene mineralsaure Suspension, die neben dem Überschuß an Tetrazoniumsalz das Azodiazoniumsalz A-N=N-Z-N₂^{⊕} enthält, wird dann durch Zugeben zu einer auf pH 4 gepufferten Suspension der Kupplungskomponente BH auf BH gekuppelt. Auch nach dieser Variante erhält man im wesentlichen die unsymmetrische Disazoverbindung (I) neben der symmetrischen

B-N=N-Z-N=N-B (V).

Nach der letztgenannten Variante können die (I) enthaltenden Pigmentzubereitungen in einer Eintopfreaktion hergestellt werden. Hierzu werden nach Beendigung der Kupplung der zweiten Stufe in die dabei erhaltene Suspension simultan die alkalisch geloste Komponente BH und die mineralsaure Lösung des tetrazotierten Diamins (II) zugegeben, wobei der pH-Wert im Bereich 4 bis 5 gehalten wird.

Zur Herstellung der (I) enthaltenden Pigmentzubereitungen kann die Kupplung der 1. Stufe zur Azodiazoniumverbindung A-N=N-Z-N₂^{⊕} in einem großen Überschuß an Tetrazoniumsalz durchgeführt werden. Das erhaltene Gemisch aus Tetrazoniumsalz und A-N=N-Z-N₂^{⊕} wird dann in üblicher Weise, z.B. wie in beiden vorstehend genannten Varianten angegeben, mit BH gekuppelt.

Nach den vorstehend beschriebenen Kupplungsvarianten erhält man die unsymmetrische Disazoverbindung (I) gegebenenfalls neben dem Pigment B-N=N-Z-N=N-B in hoher Ausbeute. Ein gegebenenfalls vorhandener Anteil an symmetrischer Disazoverbindung A-N=N-Z-N=N-A liegt, bezogen auf (I), unterhalb von 20 Gew.%.

In der Regel erhält man nach dem Verfahren Disazoverbindungen, deren Anteil an der unsymmetrischen Disazoverbindung (I) ≧ 80 Gew.% ist. D.h. die erhaltenen Disazoverbindungen enthalten - bezogen auf (I) - weniger als 20 Gew.% an der symmetrischen Disazoverbindung mit 2 Kupplungskomponenten, die eine saure Gruppe tragen (A-N=N-Z-N=N-A).

Die erfindungsgemäßen Disazoverbindungen mit einem Anteil (I) von ≧ 80 Gew.% weisen eine besonders hohe stabilisierende Wirkung auf Pigmente auf.

Der Nachweis, daß bei diesem Verfahren zum überwiegenden Teil bis im wesentlichen unsymmetrische Disazoverbindungen erhalten werden, kann z.B. durch Dünnschichtflüssigkeitschromatographie geführt werden. Man erhält DS-Chromatogramme, deren Hauptfraktion R_{f}-Werte hat, die von denen der separat hergestellten symmetrischen Disazoverbindungen A-N=N-Z-N=N-A und B-N=N-Z-N=N-B verschieden sind.

Bei der HPLC-Analyse des nach dem vorstehend angegebenen Verfahren aus 1 Mol tetrazotiertem 4,4'-Diamino-3,3'-dichlordiphenyl, 1 Mol 1(3'-Sulfophenyl)-3-methyl-pyrazolon-5 als AH und 1 Mol Acetoacet-2,4-xylidid als BH erhaltenen Reaktionsproduktes wurden die Verbindungen 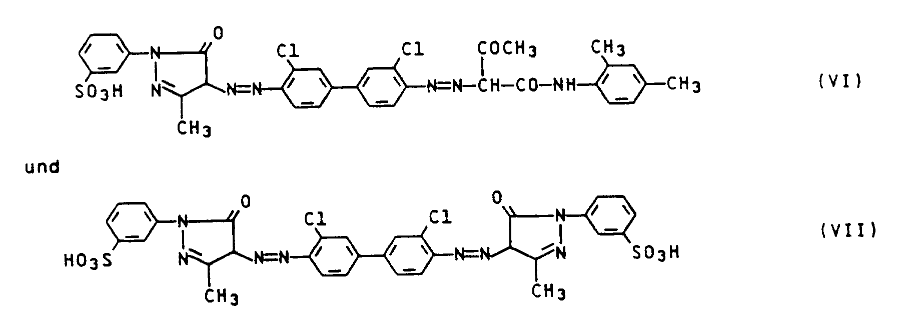
im Gewichtsverhältnis 98,3:1,7 gefunden.

Das Kupplungsprodukt (VIII) aus tetrazotiertem 4,4'-Diamino-3,3'-dichlordiphenyl mit 2 Mol Acetoacet-2,4-xylid konnte im HPLC-Chromatogramm wegen Schwerlöslichkeit nicht gefunden werden. Diese Verbindung muß wegen der Stöchiometrie in der gleichen Molmenge wie (VII) gebildet werden.

Aus dem Gewichtsverhältnis von (VI) : (VII) = 98,3:1,7 errechnet sich danach ein Molverhältnis von (VI) : (VII) : (VIII) = 96,8 : 1,6 : 1,6 bzw. ein Verhältnis von (VI) : (VII) : (VIII) = 96,9:1,7:1,4 Gew.%.

Führt man die Kupplung sowohl der ersten Stufe wie auch der zweiten Stufe im auf pH 4,5 gepufferten oder im neutralen Medium durch, so erhält man Gemische aus Disazoverbindungen mit einem deutlich geringeren Anteil an (I), der unter 50 Gew.%, bezogen auf das Gemisch, liegt.

Führt man dagegen die Kupplung in umgekehrter Reihenfolge, d.h. zuerst die Kupplung auf die neutrale Kupplungskomponente BH im mineralsauren Medium und anschließend im gepufferten Medium die Kupplung auf AH, durch, dann erhält man Gemische, die ca. 50 Gew.% an der symmetrischen Disazoverbindung mit den saure Gruppen tragenden Kupplungskomponenten enthalten. Diese Verfahrensprodukte sind zur Stabilisierung von Pigmenten nicht mehr ausreichend wirksam.

Die erfindungsgemäßen Disazoverbindungen eignen sich hervorragend als Zusätze zu Pigmenten, vorzugsweise zu Azo-, insbesondere zu Disazopigmenten zur Verbesserung der Lasur und zur Verbesserung der Stabilität gegenüber Rekristallisation, insbesondere in Druckfarben.

Für diese Anwendung werden im allgemeinen 0,5 bis 20, vorzugsweise 1 bis 5 Gew.%, bezogen auf Pigment, an (I) bzw. an dem (I) enthaltenden erfindungsgemäßen Gemisch zugegeben.

Besonders bevorzugt sind Zusätze an (I), die als neutrale Kupplungskomponente BH die des zu dotierenden Pigments haben. So ist z.B. bei C.I. Pigment Gelb 12, C.I. No. 21 090 die Disazoverbindung bevorzugt, die durch Kupplung in der zweiten Stufe mit Acetoacetanilid erhalten wird. Entsprechend erhält man mit erfindungsgemäßen Disazoverbindungen, die in der 2. Stufe mit Acetoacet-2,4-xylidid gekuppelt wurden, bei C. I. Pigment Gelb 13, P.I. 21 100 günstige Effekte. Entsprechendes gilt auch für C.I. Pigment Gelb 14, C.I. Nr. 21 095.

Eine Verbesserung der Lasur bei gleichzeitig sehr hoher Temperaturstabilität wird nicht nur bei reinen, sondern auch bei Diarylidpigmenten erreicht, die durch Mischkupplung von 3,3'-Dichlor-4,4'-diaminodiphenyl mit 2 verschiedenen Aceto-acetaryliden hergestellt werden, z.B. die Mischkupplung mit Acetoacet-2,4-dimethylanilid und Acetoacet-2-methoxyanilid. In der hochgeharzten Form erhält man bei Zusatz der erfindungsgemäßen Disazoverbindung aus 3,3'-Dichlor-4,4'-diamino-diphenyl mit 1-(4-Sulfophenyl)-3-methylpyrazolon-5 und Acetoacet-2,4-dimethylanilid Pigmente, die in Druckfarben Drucke mit hervorragender Transparenz bei gleichzeitig sehr guter Temperaturstabilität liefern. Diese günstigen Eigenschaften werden sowohl in den Zusammensetzungen erreicht, bei denen das Harz und das saure Additiv in Form der freien Säuren als auch in Form der Metallseifen,z.B. Ca- oder Zn-Seifen,vorliegen. Welche der beiden möglichen Formen gewählt wird, hängt im Einzelfall von den Ansprüchen ab, die an das Fließverhalten und an andere drucktechnische Eigenschaften der Farben gestellt werden.

Die Zugabe der erfindungsgemäßen Disazoverbindungen zu den Pigmenten kann an jeder beliebigen Stelle der Pigmentsynthese erfolgen, z.B. zur Suspension der Kupplungskomponente, zur Lösung der diazotierten Diazokomponente oder zur wäßrigen Pigmentsuspension. Im Falle der geharzten Pigmente kann die erfindungsgemäße Disazoverbindung sowohl vor oder nach der Zugabe des Harzes als auch nach der in der Regel bei hochgeharzten Pigmenten erfolgenden Wärmebehandlung im alkalischen Medium zugegeben werden.

In einzelnen Fällen kann auch die Zugabe des Additivs während der Pigmentdispergierung im Druckfarbenmedium zu einer Verbesserung der Eigenschaften führen. Vorzugsweise werden die Disazoverbindungen gemäß der Erfindung jedoch während oder unmittelbar nach der Pigmentsynthese im wäßrigen Medium zugesetzt. Welche der genannten Methoden die besten Ergebnisse liefert, kann durch einfache Versuche ermittelt werden.

Die Erfindung soll durch die folgenden Beispiele zusätzlich erläutert werden. Die Teile sind Gewichtsteile. Die Prozentangaben beziehen sich auf das Gewicht. Die Volumenteile verhalten sich zu den Gewichtsteilen wie das Liter zum Kilogramm.

### A. Prüfung der Pigmentzubereitungen

1. Dispergierung:
   Die Pigmente wurden in einem Buch-/Offsetdruck-Firnis, Pigmentgehalt 15 % auf einer Engelsmann-Tellerreibmaschine oder einem Dreiwalzenstuhl (Walzentemperatur 50°C) angerieben (Farbe 1).
2. Prüfung der Transparenz und Temperaturstabilität:
   Ein Teil der Farbe 1 wird im Trockenschrank 2 Std. bei 100°C gelagert (Farbe 2).
   Von den beiden Farben werden mit einem Probedruckgerät der Firma Prüfbau Drucke gleicher Schichtdicke (ca. 1,3 g/m²) auf Normdruckpapier, von dem ein Streifen mit schwarzer Farbe bedruckt ist, hergestellt.
   Mit einem Reflexions-Densitometer der Firma Gretag, Typ D 142-3, werden mit vorgeschaltetem "Filter für Schwarz" die Farbdichten der bunten Drucke über dem schwarz bedruckten Feld gemessen. Das Densitometer, das über dem nicht überdruckten schwarzen Feld geeicht wird (Einstellung auf Anzeige null), zeigt hierbei immer negative Farbdichtewerte an, da die aufgedruckte bunte Farbe die hohe optische Dichte des schwarzen Drucks herabsetzt.
   Je geringer die Abweichung von dem für schwarz eingestellten Wert null ist, um so transparenter ist die aufgedruckte bunte Farbe. Da beim Erhitzen der Farbe die Lasur aufgrund des Kristallwachstums der Pigmentteilchen in der Regel abnimmt, liegt die Farbdichte des mit der nicht erhitzten Farbe (Farbe 1) hergestellten Druckes (= Farbdichte D1) näher bei 0 als die Farbdichte des mit der entsprechenden auf 100°C erhitzten Farbe (Farbe 2) (= Farbdichte D2) hergestellten Druckes.
   Je weniger sich D1 und D2 voneinander unterscheiden, um so thermostabiler ist ein Pigment. Als Maß der Temperaturstabilität wurde die Wärmeempfindlichkeitszahl WEZ definiert:

   $\text{WEZ = (D1-D2) · 100}$

   Zur Beurteilung eines transparenten Pigments müssen D1 und WEZ in Betracht gezogen werden, wobei das Pigment um so günstiger zu bewerten ist, je näher D1 bei 0 liegt, d.h. je transparenter es ist, und je kleiner WEZ ist, d.h. je temperaturstabiler es ist.
   Eine weitere Aussage über die Lasur und Temperaturstabilität der Pigmente ermöglicht die visuelle Beurteilung der Drucke, wobei die Ergebnisse dieser Beurteilung mit den gemessenen Werten gut übereinstimmen.

### B. Herstellung der Disazoverbindungen

### Beispiel 1

4,4'-Diamino-3,3'-dichlordiphenyl → 1-(3'-Sulfophenyl)-3-methylpyrazol-5-on → Acetoacet-2,4-dimethylanilid.
Lösung 1a
25,32 Teile 4,4'-Diamino-3,3'-dichlordiphenyl werden in 1200 Volumenteilen 0,5 n Salzsäure mit 13,95 Teilen Natriumnitrit in der üblichen Weise tetrazotiert.
Lösung 1b
25,43 Teile 1-(3'-Sulfophenyl)-3-methylpyrazol-5-on werden in 251 Volumenteilen 0,4 n Natronlauge gelöst, Temp. = 20°C.
Lösung 1c
50,5 Teile Natriumacetat · 3 H₂O werden in 250 Volumenteilen Wasser gelöst.
Lösung 1d
22,6 Teile Acetoacet-2,4-dimethylanilid werden in 291 Volumenteilen 0,4 n Natronlauge gelöst, Temp. = 20°C.

Die Lösung 1b wird unter Rühren innerhalb 20 Minuten unter Kühlung bei 0 bis 5°C zur Lösung 1a getropft. Die erhaltene mineralsaure Suspension wird durch langsame Zugabe der Lösung 1c auf pH 4,0 gepuffert. Anschließend gibt man ohne weitere Kühlung innerhalb von 20 Minuten die Lösung 1d zum Reaktionsgemisch (nach der Zugabe pH 4,5). Nach Zugabe von ca. 5 % der Lösung 1d zeigt die Filterpapierprobe mit β-Naphthol im Reaktionsmedium kein gelöstes Tetrazoniumsalz mehr an.

Die Suspension wird anschließend auf 50°C erwärmt und bei dieser Temperatur 1 Stunde gerührt.

Das Reaktionsprodukt wird abfiltriert und bei 50°C getrocknet. Ausbeute 72,36 Teile Rohprodukt.

Die quantitative Untersuchung des Rohprodukts durch Hochdruckflüssigkeitschromatographie ergab einen Gehalt von 98 % an unsymmetrischer Disazoverbindung.

Zur Verwendung als Pigmentadditiv kann die bei der Synthese erhaltene Suspension verwendet werden.

### Reinigung des Rohprodukts:

10 Teile des Rohprodukts wurden aus 650 Volumenteilen Dimethylformamid umkristallisiert, wobei 7,95 Teile der chromatographisch reinen unsymmetrischen Disazoverbindung 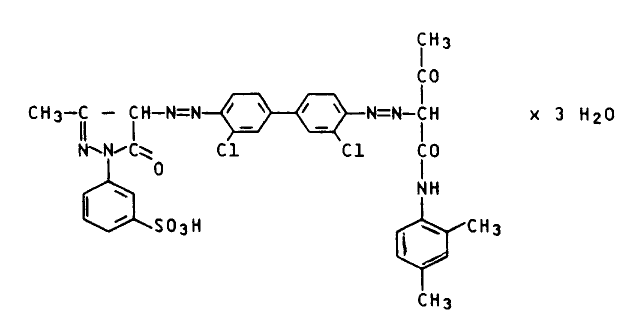
isoliert wurden.

| Analyse: C₃₄H₃₅N₇O₉Cl₂S | | | | | |
|---|---|---|---|---|---|
| | C | H | N | Cl | S |
| berechnet: | 51,8 | 4,5 | 12,4 | 9,0 | 4,1 % |
| gefunden: | 51,8 | 4,1 | 12,3 | 9,0 | 4,0 % |

### Beispiel 2

2.1 Die Lösung (1b) aus Beispiel 1 wird unter Rühren innerhalb 20 Min. unter Kühlung bei 0 bis 5°C zur Lösung (1a) aus Beispiel 1 getropft.
   Lösung 2c
   39,1 Teile Essigsäure werden mit 300 Teilen Wasser vermischt.
   Lösung 2d
   22,6 Teile Acetoacet-2,4-dimethylanilid werden in 595 Volumenteilen 1 n-Natronlauge gelöst.
2.2 Lösung 2d wird unter Kühlung bei 20°C zur Lösung 2c gegeben, wobei das Acetoacet-2,4-dimethylanilid ausgefällt wird. Zu dieser Suspension gibt man langsam unter gutem Rühren die nach 2.1 erhaltene Suspension, erwärmt das Gemisch auf 50°C und rührt bei dieser Temperatur 1 Std. nach.
   Die in der Suspension enthaltene Disazoverbindung entspricht der nach Beispiel 1 erhaltenen.

### Beispiel 3

Lösung 3a
1,4 Teile 4,4'-Diamino-3,3'-dichlordiphenyl werden in 84 Volumenteilen 0,5 n-Salzsäure mit 0,77 Teilen Natriumnitrit in der üblichen Weise tetrazotiert.
Lösung 3b
0,144 Teile 1-(3'-Sulfophenyl)-3-methylpyrazol-5-on werden in 5,7 Volumenteilen 0,1 n-Natronlauge gelöst. Temp. = 20°C.
Lösung 3c
151 Volumenteile 0,5 n Essigsäure werden im Kupplungsgefäß vorgelegt.
Lösung 3d
23,4 Teile Acetoacet-2,4-dimethylanilid werden in 159 Volumenteilen 1,5 n Natronlauge gelöst, Temp. = 20°C.
3.1 Die Lösung 3b wird innerhalb von 20 Min. unter Rühren und unter Kühlung bei 0 bis 5°C zur Lösung 3a getropft.
3.2 Von der Lösung 3d wird so viel zur Lösung 3c gegeben, daß ein pH-Wert von 5,0 erreicht wird. Dann gibt man gleichzeitig die nach 3.1 erhaltene mineralsaure Suspension und von der restlichen Lösung 3d soviel zu, daß der pH-wert bei 5 gehalten wird. Dabei entsteht neben aus dem Überschuß an tetrazotiertem 4,4'-Diamino-3,3'-dichlorphenyl gebildetem Pigment vorwiegend die unsymmetrische Disazoverbindung der Formel 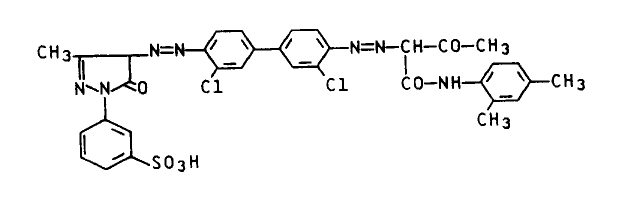 Die restliche Lösung 3d wird entsprechend den Angaben des Anwendungsbeispiels 4 zum Pigment umgesetzt.

### Beispiel 4

Analog dem in Beispiel 1 beschriebenen Verfahren wurde eine wäßrige Suspension der unsymmetrischen Disazoverbindung 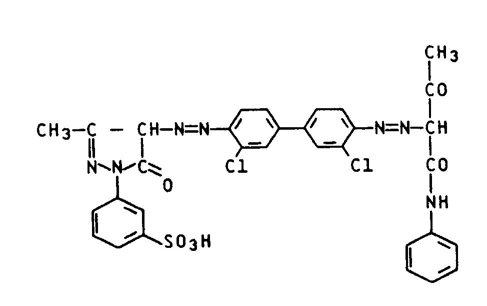
hergestellt, wobei anstelle von 22,6 Teilen Acetoacet-2,4-dimethylanilid 19,5 Teile Acetoacetanilid angewendet wurden.

### Beispiele 5 bis 35

Analog den Beispielen 1 oder 2 wurden die in der Tabelle angegebenen unsymmetrischen Disazoverbindungen in Form der wäßrigen Suspensionen hergestellt. 25,32 Teile tetrazotiertes 4,4'-Diamino-3,3'-dichlordiphenyl (Lösung: a) wurden mit den folgenden Komponenten gekuppelt:

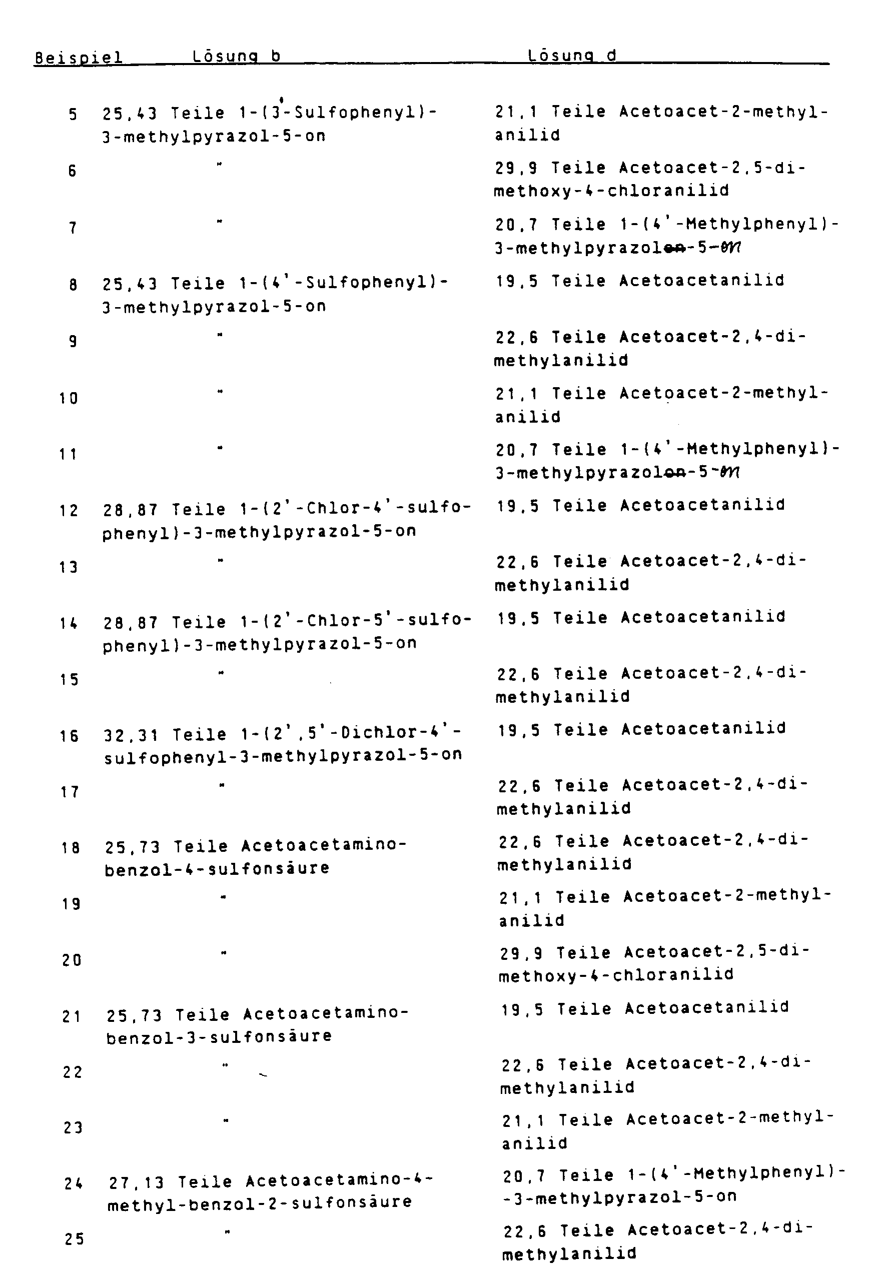

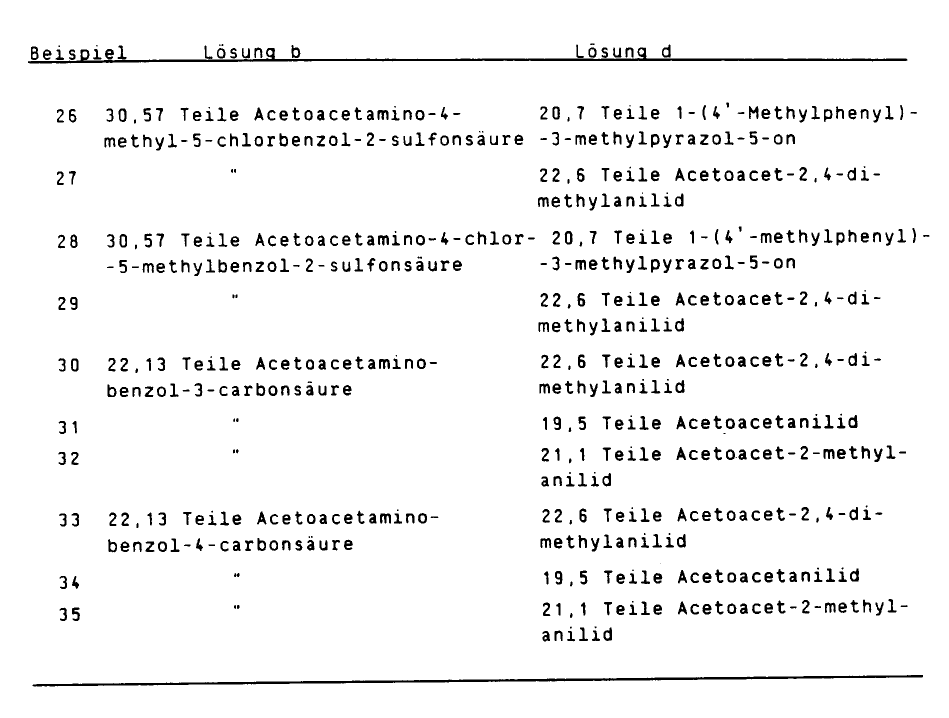

### Beispiele 36-41

Analog Beispiel 1 werden 24,44 Teile 4,4'-Diamino-3,3'-dimethoxydiphenyl tetrazotiert (Lösung a) und mit den in der Tabelle angegebenen Kupplungskomponenten gekuppelt. Aus der Suspension werden die Disazoverbindungen in üblicher Weise isoliert.

Die erhaltenen Suspensionen der Disazoverbindungen können auch direkt als Additive verwendet werden.

| Beispiel | Lösung b | Lösung d |
|---|---|---|
| 36 | 25,43 Teile 1-(3'-Sulfophenyl)-3-methylpyrazol-5-on | 19,5 Teile Acetoacetanilid |
| 37 | " | 22,6 Teile Acetoacet-2,4-dimethylanilid |
| 38 | 25,43 Teile 1-(4'-Sulfophenyl)-3-methylpyrazol-5-on | 19,5 Teile Acetoacetanilid |
| 39 | " | 22,6 Teile Acetoacet-2,4-dimethylanilid |
| 40 | 25,73 Teile Acetoacetaminobenzol-4-sulfonsäure | 19,5 Teile Acetoacetanilid |
| 41 | " | 22,6 Teile Acetoacet-2,4-dimethylanilid |

### Beispiele 42-48

Analog Beispiel 1 werden 21,23 Teile 4,4'-Diamino-3,3'-dimethyldiphenyl tetrazotiert (Lösung a) und mit den in der Tabelle angegebenen Kupplungskomponenten gekuppelt. Aus der Suspension werden die Disazoverbindungen in üblicher Weise isoliert.

Die erhaltenen Suspensionen der Disazoverbindungen können auch direkt als Additive verwendet werden.

| Beispiel | Lösung b | Lösung d |
|---|---|---|
| 42 | 25,43 Teile 1-(3'-Sulfonphenyl)-3-methylpyrazol-5-on | 22,6 Teile Acetoacet-2,4-dimethylanilid |
| 43 | 25,43 Teile 1-(4'-Sulfophenyl)-3-methylpyrazol-5-on | " |
| 44 | " | 19,5 Teile Acetoacetanilid |
| 45 | 25,73 Teile Acetoacetaminobenzol-4-sulfonsäure | " |
| 46 | " | 22,6 Teile Acetoacet-2,4-dimethylanilid |
| 47 | 25,73 Teile Acetoacetaminobenzol-3-sulfonsäure | " |
| 48 | " | 19,5 Teile Acetoacetanilid |

### Beispiel 49

4,4'-Diamino-3,3',5,5'-tetrachlordiphenyl → 1-(3'-Sulfophenyl)-3-methylpyrazol-5-on + Acetoacetanilid
Lösung 49a
13,8 Teile Natriumnitrit werden bei 10°C langsam unter Rühren in 333 Volumenteile konz. Schwefelsäure eingetragen, wobei durch Kühlung die Temperatur unter 20°C gehalten wird. Anschließend wird die Mischung auf 60°C erwärmt, bis eine klare Lösung entstanden ist. Diese wird auf 20°C abgekühlt und innerhalb 20 Minuten mit 32,2 Teilen 4,4'-Diamino-3,3',5,5'-tetrachlordiphenyl versetzt. Dann wird auf 50°C erwärmt und 2 h nachgerührt, wobei die Temperatur auf 25°C absinkt. Die Lösung wird in 2400 Teile Eiswasser gegossen und die erhaltene Tetrazolösung mit Aktivkohle versetzt und filtriert.
Lösung 49b
25,43 Teile 1-(3'-Sulfophenyl)-3-methylpyrazol-5-on werden in 251 Volumenteilen 0,4 n Natronlauge gelöst. Temp. = 20°C.
Lösung 49c
440 Teile Natriumhydroxid werden in 2000 Teilen Eiswasser gelöst.
Lösung 49d
19,51 Teile Acetoacetanilid werden in 291 Volumenteilen 0,4 n Natronlauge gelöst. Temp. = 20°C.

Die Lösung 49b wird unter Rühren innerhalb 20 Minuten bei 0 bis 5°C zur Lösung 49a getropft. Die erhaltene mineralsaure Suspension wird durch langsame Zugabe der Lösung 49c auf pH 4 gestellt. Anschließend gibt man ohne weitere Kühlung innerhalb 20 Minuten die Lösung 49d zum Reaktionsgemisch (nach der Zugabe: pH 4,5). Nach Zugabe von ca. 5 % der Lösung 49d zeigt eine Probe auf Filterpapier mit β-Naphthol im Reaktionsmedium kein gelöstes Tetrazoniumsalz mehr an.

Die Suspension wird anschließend auf 50°C erwärmt und 1 h nachgerührt. Das erhaltene Produkt kann aus der Suspension isoliert oder direkt zur Herstellung von Pigmentzubereitungen verwendet werden.

### Beispiele 50 bis 60

Analog Beispiel 49 wurden
a) 32,2 Teile 4,4'-Diamino-3,3',5,5'-tetrachlordiphenyl (Beispiele 50 bis 54) und
b) 32,2 Teile 4,4'-Diamino-2,2'-5,5-tetrachlordiphenyl (Beispiele 55 bis 60) diazotiert
und wird mit den in der Tabelle angegebenen Kupplungskomponenten gekuppelt. Die Disazoverbindungen werden in üblicher Weise isoliert.

| Beispiel | Lösung b | Lösung d |
|---|---|---|
| Diazokomponente (a) | | |
| 50 | 25,43 Teile 1-(3'-Sulfonphenyl)-3-methylpyrazol-5-on | 22,6 Teile Acetoacet-2,4-dimethylanilid |
| 51 | 25,43 Teile 1-(4'-Sulfophenyl)-3-methylpyrazol-5-on | 19,5 Teile Acetoacetanilid |
| 52 | " | 22,6 Teile Acetoacet-2,4-dimethylanilid |
| 53 | 25,73 Teile Acetoacetaminobenzol-4-sulfonsäure | 19,5 Teile Acetoacetanilid |
| 54 | " | 22,6 Teile Acetoacet-2,4-dimethylanilid |

| Diazokomponente (b) | | |
|---|---|---|
| 55 | 25,43 Teile 1-(3'-Sulfophenyl)-3-methylpyrazol-5-on | 19,5 Teile Acetoacetanilid |
| 56 | 25,43 Teile 1-(3'-Sulfophenyl)-3-methylpyrazol-5-on | 22,6 Teile Acetoacet-2,4-dimethylanilid |
| 57 | 25,43 Teile 1-(4'-Sulfophenyl)-3-methylpyrazol-5-on | 19,5 Teile Acetoacetanilid |
| 58 | " | 22,6 Teile Acetoacet-2,4-dimethylanilid |
| 59 | 25,73 Teile Acetoacetaminobenzol-4-sulfonsäure | 19,5 Teile Acetoacetanilid |
| 60 | " | 22,6 Teile Acetoacet-2,4-dimethylanilid |

### C. Pigmentzubereitungen

### Anwendungsbeispiel 1 (Zubereitung 1)

a) Tetrazotierung
   14 Teile 4,4'-Diamino-3,3'-dichlordiphenyl werden in 830 Volumenteilen 0,4 n Salzsäure bei 0°C mit 7,7 Teilen Natriumnitrit tetrazotiert. Überschüssiges Natriumnitrit wird mit Amidosulfonsäure entfernt.
b) Kupplung
   23,2 Teile Acetoacet-2,4-dimethylanilid werden in 159 Volumenteilen 1,5 n Natronlauge gelöst. Im Kupplungsgefäß werden 151 Volumenteile 0,5 n Essigsäure vorgelegt. Dann wird so viel der alkalisch gelösten Kupplungskomponente zur Essigsäure gegeben, daß ein pH-Wert von 5,0 erreicht wird.
   Dazu gibt man 0,41 Teile Disazoverbindung des Beispiels 9 in Form der bei der Synthese erhaltenen Suspension.
   Anschließend werden gleichzeitig die Tetrazolösung a und die restliche Lösung der Kupplungskomponente in das Reaktionsgefäß zugegeben, wobei der pH-Wert bei 5,0 und die Temperatur bei 20°C gehalten wird. Nach Zugabe der gesamten Kupplungskomponente geht der pH-Wert bei Zugabe der restlichen Tetrazolösung auf ca. 3,5 zurück.
c) Aufarbeitung
   Nach beendeter Kupplung wird die Pigmentsuspension mit 10 %iger Natronlauge neutralisiert und danach mit einer Lösung von 16,25 Teilen eines partiell hydrierten Kolophoniumharzes (Staybelite® Resin) in 197 Volumenteilen 0,3 n Natronlauge versetzt. Die wäßrige Suspension wird 15 Min. zum Sieden erhitzt, anschließend mit einer Lösung von 3,62 Teilen Calciumchlorid in 50 Teilen Wasser versetzt und weitere 15 Min. bei Siedetemperatur gehalten, dann auf 80°C abgekühlt und mit verdünnter Salzsäure auf pH 8 gestellt. Die Zubereitung wird abfiltriert, mit Wasser gewaschen und bei 50 bis 60°C getrocknet (Zubereitung 1).

### Vergleichsbeispiel I

Tetrazotierung, Kupplung und Nachbehandlung erfolgen entsprechend den Angaben im Anwendungsbeispiel 1 unter a), b) und c), jedoch wird das nach Beispiel 9 hergestellte Additiv nicht zugegeben (Zubereitung I).

### Vergleichsbeispiel II

Tetrazotierung, Kupplung und Nachbehandlung erfolgen entsprechend den Angaben im Anwendungsbeispiel 1 unter a), b) und c), jedoch werden zur Kupplungskomponente anstelle der Disazoverbindung aus Beispiel 9 0,142 Teile 1-(4'-Sulfophenyl)-3-methyl-pyrazol-5-on als Mischkomponente zu der Lösung des Acetoacet-2,4-dimethylanilids zugegeben (Zubereitung II).

Beurteilung der Zubereitung:
Die Prüfung der erhaltenen Zubereitungen erfolgte nach A. Nach der visuellen Beurteilung der aus den nicht erhitzten Farben 1 hergestellten Probedrucke weist der mit der Zubereitung des Anwendungsbeispiels 1 erhaltene Druck gegenüber den Vergleichsbeispielen I und II deutlich höhere Lasur auf. Die aus den erhitzten Farben 2 gefertigten Probedrucke zeigen im Falle der Zubereitung 1 eine geringe, im Falle des Vergleichsbeispiels I eine deutliche Lasurabnahme gegenüber den entsprechenden Farben 1. Eine vergleichende visuelle Beurteilung der Abnahme der Lasur des relativ deckenden Vergleichsbeispiels II mit der hochtransparenten Zubereitung 1 ist wegen der großen Unterschiede in der Transparenz dieser beiden Produkte nicht möglich.

Neben der hohen Lasur und der guten Temperaturstabilität besitzt die Zubereitung 1 ein günstiges Fließverhalten, sowie hohe Farbstärke und guten Glanz.

Messung der Farbdichten mit dem Densitometer:

| | Farbdichte | | |
|---|---|---|---|
| | Farbe 1 | Farbe 2 | WEZ |
| Zubereitung 1 | - 0,87 | - 1,04 | 17 |
| Vergleichsbeispiel I | - 0,99 | - 1,29 | 30 |
| Vergleichsbeispiel II | - 1,05 | - 1,20 | 15 |

### Anwendungsbeispiel 2 (Zubereitung 2)

Die Tetrazotierung von 14 Teilen 4,4'-Diamino-3,3'-dichlordiphenyl und Kupplung mit 23,2 Teilen Acetoacet-2,4-dimethylanilid werden analog dem Anwendungsbeispiel 1 a) und b) durchgeführt mit dem Unterschied, daß anstelle der Disazoverbindung des Beispiels 9 0,41 Teile Disazoverbindung des Beispiels 1 in Form der bei der Synthese erhaltenen Suspension in das Reaktionsmedium gegeben werden. Harzung, Nachbehandlung und Aufarbeitung der Pigmentsuspension werden entsprechend Anwendungsbeispiel 1, c) durchgeführt.

### Vergleichsbeispiel III (Zubereitung III)

Tetrazotierung, Kupplung und Nachbehandlung erfolgen entsprechend Anwendungsbeispiel 2, jedoch werden anstelle des nach Beispiel 1 hergestellten Additivs 0,142 Teile 1-(3'-Sulfophenyl)-3-methylpyrazol-5-on als Mischkomponente zu der Lösung des Acetoacet-2,4-dimethylanilids zugegeben.

Die Zubereitungen 2, I und III werden nach A beurteilt. Die Farbdichte-Messungen ergeben folgende Werte:

| | Farbdichte | | |
|---|---|---|---|
| | Farbe 1 | Farbe 2 | WEZ |
| Zubereitung 2 | - 0,90 | - 1,06 | 16 |
| Zubereitung I | - 0,99 | - 1,29 | 30 |
| Zubereitung III | - 0,96 | - 1,19 | 23 |

Die visuelle Beurteilung der Probedrucke zeigt, daß im Falle der Zubereitung 2 die Farbe 2 gegenüber der Farbe 1 einen geringeren Lasurverlust aufweist als im Falle des Vergleichsbeispiels III. Außerdem besitzt die Zubereitung 2 in der Farbe 1 eine bessere Lasur als das Vergleichsbeispiel III. Das Vergleichsbeispiel I zeigt in der Farbe 1 die geringste Lasur und beim Vergleich der Farbe 2 mit der Farbe 1 die stärkste Abnahme der Lasur der drei bewerteten Proben.

### Anwendungsbeispiel 3 (Zubereitung 3)

Die Zubereitung 3 wird analog Anwendungsbeispiel 2 hergestellt mit dem Unterschied, daß anstelle der Disazoverbindung des Beispiels 1 die gleiche Menge Disazoverbindung des Beispiels 2 in Form der bei der Synthese erhaltenen Suspension zugegeben wird. Die Eigenschaften der Zubereitung entsprechen denen der Zubereitung 2.

### Anwendungsbeispiel 4 (Zubereitung 4)

a) Tetrazotierung
   12,7 Teile 4,4'-Diamino-3,3'-dichlordiphenyl werden in 753 Volumenteilen 0,4 n Salzsäure bei 0°C mit 6,93 Teilen Natriumnitrit tetrazotiert. Überschüssiges Natriumnitrit wird mit Amidosulfonsäure entfernt.
b) Kupplung
   Zu der nach Beispiel 3.2 erhaltenen Suspension werden gleichzeitig die Tetrazolösung a) und die restliche Lösung 3d des Beispiels 3 gegeben, wobei der pH-Wert bei 5,0 und die Temperatur bei 20°C gehalten werden. Nach Zugabe der gesamten Kupplungskomponente geht der pH-Wert bei Zugabe der restlichen Tetrazolösung auf ca. 3,5 zurück.
   Harzung, Nachbehandlung und Aufarbeitung erfolgen entsprechend Zubereitung 2.
   Die Eigenschaften der Zubereitung entsprechen denen der Zubereitungen 2 und 3.

### Anwendungsbeispiel 5 (Zubereitung 5)

Die Tetrazotierung von 14 Teilen 4,4'-Diamono-3,3'-dichlorphenyl und Kupplung mt 23,2 Teilen Acetoacet-2,4-dimethylanilid werden analog Zubereitung 1 durchgeführt mit dem Unterschied, daß anstelle des in Zubereitung 1 verwendeten Additivs 0,83 Teile Disazoverbindung des Beispiels 1 in Form der bei der Synthese erhaltenen Suspension in das Reaktionsmedium gegeben werden.

Nach beendeter Kupplung wird die Pigmentsuspension mit 10 %iger Natronlauge neutralisiert und danach mit einer Lösung von 16,25 Teilen eines partiell hydrierten Kolophoniumharzes ("Staybelite Resin") in 197 Volumenteilen 0,3 n Natronlauge versetzt. Die Suspension wird 15 Min. zum Sieden erhitzt, anschließend wird das Harz durch Zugabe von 10 %iger Salzsäure bei pH 4,5 ausgefällt. Die Suspension wird weitere 15 Min. beim Sieden gehalten, auf 60°C abgekühlt, abfiltriert, mit Wasser ausgewaschen und bei 50 bis 60°C getrocknet. Mit der Zubereitung erhält man eine Druckfarbe, die Drucke mit hoher Lasur liefert und die eine gute Temperaturstabilität (WEZ = 9) aufweist.

### Anwendungsbeispiel 6 (Zubereitung 6)

Die Tetrazotierung von 14 Teilen 4,4'-Diamino-3,3'-dichlordiphenyl und Kupplung mit 23,2 Teilen Acetoact-2,4-dimethylanilid werden analog Zubereitung 1, a) und b) durchgeführt mit dem Unterschied, daß vor der Kupplung des Pigments kein Additiv in das Reaktionsmedium gegeben wird. Nach beendeter Kupplung wird die Pigmentsuspension mit 10 %iger Natronlauge neutralisiert und danach mit einer Lösung von 16,25 Teilen eines partiell hydrierten Kolophoniumharzes in 197 Volumenteilen 0,3 n Natronlauge versetzt. Die Suspension wird 15 Min. zum Sieden erhitzt. Dazu gibt man anschließend 0,41 Teile Disazoverbindung des Beispiels 1 in Form der bei der Synthese erhaltenen Suspension.

Dann wird durch Zugabe von 10 %iger Salzsäure das Harz ausgefällt und die Suspension weitere 15 Min. beim Sieden gehalten.

Die Zubereitung wird auf 60°C abgekühlt, abfiltriert, mit Wasser ausgewaschen und bei 50 bis 60°C getrocknet.

Das Pigment ergibt nach dem Anreiben in einem Buch-/Offset-Firnis eine sehr transparente Farbe, deren hohe Lasur auch beim Erwärmen auf 100°C nur wenig zurückgeht.

### Anwendungsbeispiel 7 (Zubereitung 7)

Die Synthese und Nachbehandlung der Pigmentzubereitung werden analog Zubereitung 1 durchgeführt mit dem Unterschied, daß anstelle der Disazoverbindung des Beispiels 9 0,83 Teile Disazoverbindung des Beispiels 18 in Form der bei der Synthese erhaltenen Suspension in das Reaktionsmedium gegeben werden.

Aus dem Pigment kann eine sehr transparente Offsetfarbe von sehr hoher Temperaturstabilität bereitet werden, die sich von der aus der Zubereitung 1 hergestellten Farbe durch einen grünstichigen Farbton unterscheidet.

| | Farbdichte | | |
|---|---|---|---|
| | Farbe 1 | Farbe 2 | WEZ |
| Zubereitung 7 | - 0,91 | - 0,98 | 7 |

### Anwendungsbeispiel 8 (Zubereitung 8)

Die Synthese und Nachbehandlung der Pigmentzubereitung werden analog der Zubereitung 7 durchgeführt mit dem Unterschied, daß das Harz nicht wie in Zubereitung 7 in Form der Calciumseife, sondern als Zinkseife ausgefällt wird. Dazu wird anstelle des Calciumchlorids eine Lösung von 8,62 Teilen Zinksulfat x 7 H₂O in 50 Teilen Wasser zur Suspension gegeben. Anschließend wird diese weitere 15 Min. beim Sieden gehalten, dann auf 80°C abgekühlt und mit verdünnter Salzsäure auf pH 6 gestellt. Die Aufarbeitung erfolgt entsprechend Zubereitung 7.
Aus der erhaltenen Pigmentzubereitung kann eine transparente Offsetfarbe von hoher Temperaturstabilität erhalten werden.

### Anwendungsbeispiel 9 (Zubereitung 9)

Die Synthese und Nachbehandlung der Pigmentzubereitung werden analog der Zubereitung 1 durchgeführt mit dem Unterschied, daß anstelle der Disazoverbindung des Beispiels 9 0,83 Teile Disazoverbindung des Beispiels 22 in Form der bei der Synthese erhaltenen Suspension in das Reaktionsmedium gegeben werden.

Aus der Zubereitung kann ähnlich wie bei der Zubereitung 7 eine lasierende und temperaturstabile Druckfarbe von grünstichiggelbem Farbton hergestellt werden.

### Anwendungsbeispiel 10 (Zubereitung 10)

a) Tetrazotierung
   14 Teile 4,4'-Dianino-3,3'-dichlordiphenyl werden analog Anwendungsbeispiel 1, a) tetrazotiert.
b1) Einseitige Kupplung mit 1-(3'-Sulfophenyl)-3-methylpyrazol-5-on. Zu 2 % der Tetrazolösung aus a) werden innerhalb ca. 10 Min. 0,28 Teile 1-(3'-Sulfophenyl)-3-methylpyrazol-5-on, gelöst in 12 Volumenteilen 0,1 n Natronlauge gegeben. Die erhaltene mineralsaure Suspension wird mit Natriumacetat auf pH 4 abgepuffert.
b2) Kupplung des Pigments
   23 Teile Acetoacet-2,4-dimethylanilid werden in 157 Volumenteilen 1,5 n Natronlauge gelöst. Im Kupplungsgefäß werden 150 Volumenteile 0,5 n Essigsäure vorgelegt. Dann wird so viel der alkalisch gelösten Kupplungskomponente zur Essigsäure gegeben, daß ein pH-Wert von 5,0 erreicht wird. Dazu gibt man dann die nach b1) erhaltene Suspension.

Die Kupplung, Nachbehandlung und Aufarbeitung erfolgen analog Anwendungsbeispiel 1, c), jedoch werden 15,93 Teile anstelle von 16,25 Teilen des partiell hydrierten Kolophoniumharzes gelöst in 193 Volumenteilen 0,3 n Natronlauge zugesetzt.

Die Zubereitung 10 besitzt in einem Buch-/Offsetdruck sehr gute Transparenz und Temperaturstabilität.

### Anwendungsbeispiel 11 (Zubereitung 11)

Die Pigmentsynthese wird analog Zubereitung 1 durchgeführt mit dem Unterschied, daß als Kupplungskomponente anstelle von 23,2 Teilen Acetoacet-2,4-dimethylanilid 20 Teile Acetoacetanilid und anstelle der Disazoverbindung des Beispiels 9 1,63 Teile Disazoverbindung des Beispiels 8 in Form der bei der Synthese erhaltenen Suspension in das Reaktionsmedium gegeben werden.

Nach beendeter Kupplung wird die Pigmentsuspension mit 10 %iger Natronlauge neutralisiert und danach mit einer Lösung von 14,92 Teilen partiell hydrierten Kolophoniumharzes in 181 Volumenteilen 0,3 n Natronlauge versetzt. Die Suspension wird 15 Min. zum Sieden erhitzt, anschließend das Harz durch Zugabe von 3,42 Teilen Calciumchlorid, gelöst in 50 Teilen Wasser, ausgefällt, die Suspension weitere 15 Min. beim Sieden gehalten, dann auf 80°C abgekühlt und mit verdünnter Salzsäure auf pH 8 gestellt.

Die Zubereitung wird abfiltriert, mit Wasser gewaschen und bei 50 bis 60°C getrocknet.
Aus dem Pigment kann eine rotstichig gelbe Offsetfarbe von außergewöhnlich hoher Transparenz und Temperaturstabilität bereitet werden.

Die Prüfung eines Probedrucks nach A ergab folgende Werte:

| | Farbdichte | | |
|---|---|---|---|
| | Farbe 1 | Farbe 2 | WEZ |
| Zubereitung 11 | - 0,71 | - 0,79 | 8 |

### Anwendungsbeispiel 12 (Zubereitung 12)

Die Pigmentsynthese wird analog Zubereitung 11 durchgeführt, jedoch werden 1,21 Teile anstelle von 1,63 Teilen Disazoverbindung des Beispiels 8 in Form der bei der Synthese erhaltenen Suspension in das Reaktionsmedium gegeben.

Nach beendeter Kupplung wird die Pigmentsuspension mit 10 %iger Natronlauge neutralisiert und danach mit einer Lösung von 14,92 Teilen Balsamharz in 181 Volumenteilen 0,3 n Natronlauge versetzt. Die Suspension wird 15 Min. zum Sieden erhitzt, anschließend das Harz durch Zugabe von 10 %iger Salzsäure bei pH 4,5 ausgefällt und die Suspension weitere 15 Min. beim Sieden gehalten.

Die Zubereitung wird abfiltriert, mit Wasser gewaschen und bei 50 bis 60°C getrocknet. Die Zubereitung weist in Offsetdruckfarben ähnliche Vorteile auf wie die Zubereitung 11.

### Anwendungsbeispiel 13 (Zubereitung 13)

Synthese, Nachbehandlung und Aufarbeitung entsprechen der Zubereitung 11 jedoch werden 0,8 Teile anstelle von 1,63 Teilen Disazoverbindung des Beispiels 8 in Form der bei der Synthese erhaltenen Suspension zum Reaktionsmedium sowie bei der Harzung anstelle von 14,92 Teilen nur 6,14 Teile des partiell hydrierten Kolophoniumharzes, gelöst in 75 Volumenteilen 0,3 n Natronlauge zur neutralisierten Pigmentsuspension gegeben. Zur Ausfällung des Harzes werden anstelle von 3,42 Teilen 1,42 Teile Calciumchlorid, gelöst in 20 Teilen Wasser benötigt.

Das Pigment weist in einer Offsetdruckfarbe gute Lasur und hervorragende Temperaturstabilität auf und ist im Vergleich zu der Zubereitung 11 grünstichiger und etwas weniger lasierend.

### Anwendungsbeispiel 14 (Zubereitung 14)

Synthese, Nachbehandlung und Aufarbeitung entsprechen Zubereitung 11 mit dem Unterschied, daß anstelle der nach Beispiel 8 erhaltenen Disazoverbindung 1,63 Teile Disazoverbindung des Beispiels 4 in Form der bei der Synthese erhaltenen Suspension in das Reaktionsmedium gegeben werden.

Die Zubereitung besitzt im Offsetdruck ähnliche Vorteile wie die Zubereitung 11:

| | Farbdichte | | |
|---|---|---|---|
| | Farbe 1 | Farbe 2 | WEZ |
| Zubereitung 14 | - 0,81 | - 0,87 | 6 |

### Anwendungsbeispiel 15 (Zubereitung 15)

Synthese, Nachbehandlung und Aufarbeitung entsprechen Zubereitung 12 mit dem Unterschied, daß anstelle von 1,21 Teilen Disazoverbindung des Beispiels 8 0,8 Teile Disazoverbindung des Beispiels 21 in Form der bei der Synthese erhaltenen Suspension in das Reaktionsmedium gegeben werden. Außerdem wird anstelle von Balsamharz partiell hydriertes Kolophonium verwendet.

Das erhaltene Pigment besitzt in Offset-Farben eine hohe Lasur und Temperaturstabilität und ist im Vergleich zu der Zubereitung 12 deutlich grünstichiger.

### Anwendungsbeispiel 16 (Zubereitung 16)

Die Pigmentsynthese wird analog Zubereitung 1 durchgeführt mit dem Unterschied, daß als Kupplungskomponente anstelle von 23,2 Teilen Acetoacet-2,4-dimethylanilid 21,6 Teile Acetoacet-2-methylanilid und anstelle der Disazoverbindung des Beispiels 9 0,4 Teile Disazoverbindung des Beispiels 5 in Form der bei der Synthese erhaltenen Suspension in das Reaktionsmedium gegeben werden.

Nach beendeter Kupplung wird die Pigmentsuspension mit 10 %iger Natronlauge neutralisiert und danach mit einer Lösung von 15,58 Teilen eines partiell hydrierten Kolophoniumharzes in 189 Volumenteilen 0,3 n Natronlauge versetzt. Die Suspension wird 15 Min. zum Sieden erhitzt, anschließend das Harz durch Zugabe von 10 %iger Salzsäure bei pH 4,5 ausgefällt und die Suspension weitere 15 Min. beim Sieden gehalten. Die Zubereitung wird abfiltriert, mit Wasser ausgewaschen und bei 50 bis 60°C getrocknet.

Das Pigment besitzt in einer Offset-Farbe hohe Lasur und Temperaturstabilität.

### Anwendungsbeispiel 17 (Zubereitung 17)

Die Synthese des Pigments wird analog Zubereitung 16 durchgeführt mit dem Unterschied, daß anstelle der Disazoverbindung des Beispiels 5 0,4 Teile Disazoverbindung des Beispiels 10 in Form der bei der Synthese erhaltenen Suspension in das Reaktionsmedium gegeben werden.

Die Harzung und Nachbehandlung unterscheidet sich von der Zubereitung 16 dadurch, daß das Harz durch Zugabe von 3,48 Teilen Calciumchlorid, gelöst in 50 Teilen Wasser, zur siedenden Suspension ausgefällt wird. Anschließend wird weitere 15 Min. beim Sieden gehalten, dann auf 80°C abgekühlt und mit verdünnter Salzsäure pH 8 eingestellt. Die Aufarbeitung erfolgt analog Zubereitung 16.

Die Zubereitung besitzt in einer Offsetdruckfarbe hervorragende Transparenz und gute Temperaturstabiltät.

| | Farbdichte | | |
|---|---|---|---|
| | Farbe 1 | Farbe 2 | WEZ |
| Zubereitung 17 | - 0,86 | - 1,02 | 16 |

### Anwendungsbeispiel 18 (Zubereitung 18)

Synthese, Nachbehandlung und Aufarbeitung des Pigments werden analog Zubereitung 17 durchgeführt mit dem Unterschied, daß anstelle der Disazoverbindung des Beispiels 10 0,82 Teile Disazoverbindung des Beispiels 23 in Form der bei der Synthese erhaltenen Suspension in das Reaktionsmedium gegeben werden.

Die Zubereitung zeigt im Offset-Druck hohe Transparenz und Temperaturstabilität, unterscheidet sich jedoch von der Zubereitung 17 durch einen grünstichigeren Farbton.

### Anwendungsbeispiel 19 (Zubereitung 19)

Synthese, Nachbehandlung und Aufarbeitung des Pigments werden analog Zubereitung 16 durchgeführt mit dem Unterschied, daß anstelle der Disazoverbindung des Beispiels 5 0,82 Teile Disazoverbindung des Beispiels 19 in Form der bei der Synthese erhaltenen Suspension in das Reaktionsmedium gegeben werden.

Die Zubereitung zeigt im Offset-Druck hohe Transparenz und Temperaturstabilität und besitzt einen ähnlichen Farbton wie die Zubereitung 18.

### Anwendungsbeispiel 20 (Zubereitung 20)

Die Pigmentsynthese wird analog Zubereitung 1 durchgeführt mit dem Unterschied, daß als Kupplungskomponente anstelle von 23,2 Teilen Acetoacet-2,4-dimethylanilid eine Mischung von 22,04 Teilen Acetoacet-2,4-dimethylanilid und 1,17 Teilen Acetoacet-2-methoxyanilid verwendet werden. Die Harzung, Nachbehandlung und Aufarbeitung erfolgen wie bei der Zubereitung 5. Das Pigment besitzt in einer Offsetdruckfarbe hohe Transparenz und gute Temperaturstabilität.

### Anwendungsbeispiel 21 (Zubereitung 21)

Die Pigmentsynthese wird analog Zubereitung 1 durchgeführt mit dem Unterschied, daß als Kupplungskomponente anstelle von 23,2 Teilen Acetoacet-2,4-dimethylanilid 30,70 Teile Acetoacet-2,5-dimethoxy-4-chloranilid und anstelle von 0,41 Teilen Disazoverbindung des Beispiels 9 0,45 Teile Disazoverbindung des Beispiels 6 in Form der bei der Synthese erhaltenen Suspension in das Reaktionsmedium gegeben werden.

Die Harzung, Nachbehandlung und Aufarbeitung erfolgen analog der Zubereitung 5, jedoch werden anstelle des partiell hydrierten Kolophoniums 2,38 Teile Balsamharz, gelöst in 29 Volumenteilen 0,3 n Natronlauge verwendet.

Die Zubereitung besitzt im Offset-Druck gute Transparenz und Temperaturstabilität.

### Anwendungsbeispiel 22 (Zubereitung 22)

Synthese, Nachbehandlung und Aufarbeitung erfolgen entsprechend den Angaben bei der Zubereitung 21 mit dem Unterschied, daß anstelle von 0,45 Teilen Disazoverbindung des Beispiels 6 1,85 Teile Disazoverbindung des Beispiels 20 in Form der bei der Synthese erhaltenen Suspension in das Reaktionsmedium gegeben werden.

Die Zubereitung besitzt im Offset-Druck ähnliche Eigenschaften wie die Zubereitung 21.

### Anwendungsbeispiel 23 (Zubereitung 23)

### a) Tetrazotierung

14 Teile 4,4'-Diamino-3,3'-dichlordiphenyl werden entsprechend Anwendungsbeispiel 1a tetrazotiert. Die Lösung wird mit 14,75 Teilen Natriumacetat . 3 H₂O und 1,2 Teilen eines Emulgators (5-fach ethoxilierte Ölsäure) versetzt. Vor Kupplungsbeginn rührt man 0,4 Teile Disazoverbindung des Beispiels 7 in Form der bei der Synthese erhaltenen Suspension in die Tetrazolösung ein.

### b) Kupplung

21,60 Teile 1-(4'-Methylphenyl)-3-methylpyrazol-5-on werden in 600 Volumenteilen 0,2 n Natronlauge bei 20°C gelöst.

Im Kupplungsgefäß wird die Tetrazolösung a) vorgelegt und dazu innerhalb 30 Minuten die alkalisch gelöste Kupplungskomponente gegeben. Nach beendeter Kupplung stellt sich der pH auf 4 und die Temperatur auf 10°C ein. Die Suspension wird vorsichtig auf 40°C erwärmt. Bei dieser Temperatur ist keine überschüssige Tetrazolösung mehr nachweisbar. Anschließend wird zum Sieden erhitzt und 20 Minuten gekocht.

Die Zubereitung wird abfiltriert, mit Wasser gewaschen und bei 50 bis 60°C getrocknet.

Die so erhaltene Zubereitung ergibt gegenüber einem entsprechenden, jedoch ohne Additiv hergestellten Pigment höhere Lasur und bessere Temperaturstabilität.

### Anwendungsbeispiel 24 (Zubereitung 24)

13,51 Teile 4,4-Diamino-3,3'-dimethoxydiphenyl werden mit 20,0 Teilen Acetoacetanilid gekuppelt, wobei 0,39 Teile Disazoverbindung des Beispiels 38 in Form der bei der Synthese erhaltenen Suspension zugegeben werden. Tetrazotierung, Kupplung und Zugabe des Additivs erfolgen analog Anwendungsbeispiel 1, a) bzw. 1, b). Nach beendeter Kupplung wird die Pigmentsuspension auf 100°C erhitzt und 15 Minuten beim Sieden gehalten. Anschließend wird filtriert, mit Wasser gewaschen und bei 50 bis 60°C getrocknet.

Die so erhaltene Zubereitung ergibt gegenüber einem entsprechenden, jedoch ohne Additiv hergestellten Pigment höhere Lasur und bessere Temperaturstabilität.

### Anwendungsbeispiel 25 (Zubereitung 25)

Die Snythese und Nachbehandlung der Pigmentzubereitung werden analog der Zubereitung 1 durchgeführt mit dem Unterschied, daß anstelle der Disazoverbindung des Beispiels 9 0,91 Teile der Disazoverbindung des Beispiels 17 in Form der bei der Synthese erhaltenen Suspension in das Reaktionsmedium gegeben werden. Aus der Zubereitung kann eine hoch lasierende, temperaturstabile Druckfarbe von hoher Farbstärke hergestellt werden, die gegenüber der Zubereitung 1 einen grünstichigeren Farbton besitzt.

### Anwendungsbeispiele 26 und 27 (Zubereitungen 26 und 27)

Die Synthese und Nachbehandlung der Pigmentzubereitungen 26 und 27 werden analog der Zubereitung 5 durchgeführt, mit dem Unterschied, daß anstelle der Disazoverbindung des Beispiels 1 0,89 Teile der Disazoverbindung des Beispiels 29 (Zubereitung 26) bzw. 0,89 Teile der Disazoverbindung des Beispiels 27 (Zubereitung 27) in Form der bei der Synthese erhaltenen Suspension in das Reaktionsmedium gegeben werden.

Die Zubereitungen ergeben transparente und temperaturstabile Druckfarben mit gegenüber Zubereitung 5 grünstichigerem Farbton.

### Anwendungsbeispiele 28 und 29 (Zubereitungen 28 und 29)

Die Synthese und Nachbehandlung der Pigmentzubereitungen 28 und 29 werden analog Zubereitung 1 durchgeführt, mit dem Unterschied, daß anstelle der Disazoverbindung des Beispiels 9 0,91 Teile der Disazoverbindung des Beispiels 50 (Zubereitung 28) bzw. 0,91 Teile der Disazoverbindung des Beispiels 52 (Zubereitung 29) in Form der bei der Synthese erhaltenen Suspension in das Reaktionsmedium gegeben werden. Mit den Zubereitungen werden hochtransparente und temperaturstabile Druckfarben hergestellt, die Drucke mit hoher Farbstärke und einem grünstichig gelben Farbton liefern.

| | Farbdichte | | |
|---|---|---|---|
| | Farbe 1 | Farbe 2 | WEZ |
| Zubereitung 28 | - 0,42 | - 0,51 | 9 |
| Zubereitung 29 | - 0,36 | - 0,44 | 8 |

### Anwendungsbeispiel 30 (Zubereitung 30)

Die Synthese und Nachbehandlung der Pigmentzubereitung werden analog der Zubereitung 5 durchgeführt, mit dem Unterschied, daß anstelle der Disazoverbindung des Beispiels 1 0,91 Teile der Disazoverbindung des Beispiels 56 in Form der bei der Synthese erhaltenen Suspension in das Reaktionsmedium gegeben werden.

Aus der Zubereitung 30 erhält man eine Druckfarbe mit ähnlichen Eigenschaften wie aus den Zubereitungen 28 und 29, jedoch mit noch grünstichigerem Farbton.

### Anwendungsbeispiele 31 und 32 (Zubereitung 31 und 32)

Die Synthese und Nachbehandlung der Pigmentzubereitungen 31 und 32 werden analog der Zubereitung 11 durchgeführt, mit dem Unterschied, daß anstelle der Disazoverbindung des Beispiels 8 0,84 Teile der Disazoverbindung des Beispiels 12 (Zubereitung 31) bzw. 0,41 Teile der Disazoverbindung des Beispiels 14 (Zubereitung 32) in Form der bei der Synthese erhaltenen Suspension in das Reaktionsmedium gegeben werden.

Aus den Zubereitungen können temperaturstabile Druckfarben von hoher Farbstärke hergestellt werden, die Drucke mit sehr hoher Lasur und hoher Farbstärke liefern.

### Anwendungsbeispiele 33 und 34 (Zubereitungen 33 und 34)

Die Synthese und Nachbehandlung der Pigmentzubereitungen 33 und 34 werden analog der Zubereitung 11 durchgeführt mit dem Unterschied, daß anstelle der Disazoverbindung des Beispiels 8 1,69 Teile der Disazoverbindung des Beispiels 24 (Zubereitung 33) bzw. 1,79 Teile der Disazoverbindung des Beispiels 51 (Zubereitung 34) in Form der bei der Synthese erhaltenen Suspension in das Reaktionsmedium gegeben werden.

Aus den Zubereitungen können transparente und temperaturstabile Druckfarben hergestellt werden, wobei die Zubereitung 34 gegenüber der Zubereitung 33 Drucke mit grünstichigerem Farbton liefert.

| | Farbdichte | | |
|---|---|---|---|
| | Farbe 1 | Farbe 2 | WEZ |
| Zubereitung 33 | - 0,48 | - 0,53 | 5 |
| Zubereitung 34 | - 0,53 | - 0,62 | 9 |

## Patentansprüche

1. Disazoverbindungen auf der Basis von 4,4'-Diaminodiphenylverbindungen, die mindestens 80 Gew.% einer Disazoverbindung der allgemeinen Formel
A-N=N-Z-N=N-B (I)
enthalten, in der
Z für 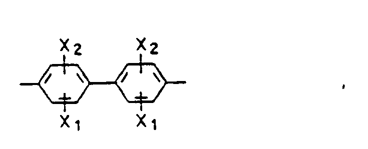 worin X₁ und X₂ unabhängig voneinander Wasserstoff, Chlor, Brom, Methoxy oder Methyl bedeuten und die Substituenten X₁ und X₂ symmetrisch angeordnet sind,
A für einen Rest der Kupplungskomponenten 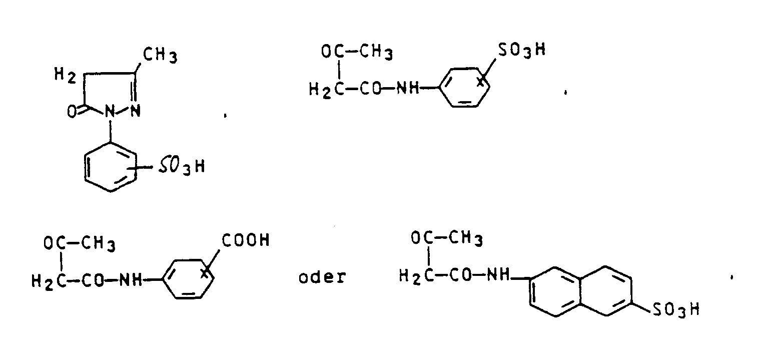 wobei die Benzolreste und der Naphthalinrest gegebenenfalls durch Chlor, Methyl und/oder Methoxy ein- oder zweifach substituiert sind und
B für einen Rest der Kupplungskomponenten 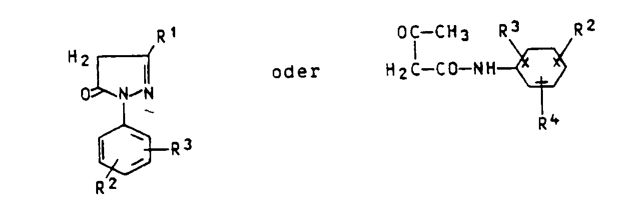 stehen, worin R¹ Methyl oder Carbo-C₁- bis C₄-alkoxy und R², R³ und R⁴ unabhängig voneinander Wasserstoff, Methyl, Methoxy oder Chlor bedeuten.

2. Disazoverbindungen gemäß Anspruch 1 , dadurch gekennzeichnet, daß Z für 3,3'-Dichlordiphenylen-4,4', 3,3'-Dimethoxydiphenylen-4,4', 3,3'-Dimethyldiphenylen-4,4', 3,3', 5,5'-Tetrachlordiphenylen-4,4' oder 2,2', 5,5'-Tetrachlordiphenylen-4,4' steht.

3. Disazoverbindungen gemäß Anspruch 1, dadurch gekennzeichnet, daß Z für 3,3'-Dichlordiphenylen-4,4' steht.

4. Disazoverbindungen gemäß Anspruch 1, 2 oder 3, dadurch gekennzeichnet, daß sich A vom 1-(3'-Sulfophenyl)-3-methyl-pyrazol-5-on. 1-(4'-Sulfophenyl)-3-methylpyrazol-5-on, 1-(2'-Chlor-4'-sulfophenyl)-3-methylpyrazol-5-on, 1-(2'-Chlor-5'-sulfophenyl)-3-methylpyrazol-5-on, 1-(2',5'-Dichlor-4'-sulfophenyl)-3-methylpyrazol-5-on, von der Acetoacetaminobenzol-3-sulfonsäure, Acetoacetaminobenzol-4-sulfonsäure, Acetacetamino-4-methylbenzol-2-sulfonsäure, Acetoacetamino-4-methyl-5-chlorbenzol-2-sulfonsäure, Acetoacetaminobenzol-3-carbonsäure oder von der Acetoacetaminobenzol-4-carbonsäure ableitet.

5. Disazoverbindungen gemäß Anspruch 1, 2 oder 3, dadurch gekennzeichnet, daß A der Rest des 1(3'-Sulfophenyl)-3-methylpyrazol-5-ons, des 1(4'-Sulfophenyl)-3-methylpyrazol-5-ons, der Acetoacetaminobenzol-3-sulfonsäure oder der Acetoacetaminobenzol-4-sulfonsäure ist.

6. Disazoverbindungen gemäß den Ansprüchen 1 bis 5, dadurch gekennzeichnet, daß sich B vom Acetoacetanilid, Acetoacet-o-toluidid, Acetoacetamino-2,4-dimethylbenzol, Acetoacetamino-2,5-dimethoxy-4-chlorbenzol, Acetoacetamino-2-methoxybenzol, 1-Phenyl-3-methylpyrazol-5-on, 1-(4'-Methylphenyl)-3-methylpyrazol-5-on oder vom 1-Phenyl-3-carboethoxypyrazol-5-on ableitet.

7. Disazoverbindungen gemäß den Ansprüchen 1 bis 5, dadurch gekennzeichnet, daß B der Rest eines Acetoacetanilids der allgemeinen Formel 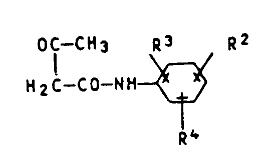 ist, in der R², R³ und R⁴ unabhängig voneinander Wasserstoff, Methyl, Methoxy oder Chlor bedeuten.

8. Disazoverbindungen gemäß den Ansprüchen 1 bis 5, dadurch gekennzeichnet, daß sich B vom Acetoacetanilid, Acetoacet-o-toluidid, Acetoacetamino-2,4-dimethylbenzol, Acetoacetamino-2,5-dimethoxy-4-chlorbenzol oder vom Acetoacetamino-2-methoxybenzol ableitet.

9. Verwendung der Disazoverbindungen gemäß den Ansprüchen 1 bis 8 als Zusätze zu Pigmenten zur Verbesserung der Transparenz, der Temperaturstabilität und des Fließverhaltens dieser Pigmente.

10. Zubereitungen von Disazopigmenten der allgemeinen Formel
B-N=N-Z-N=N-B (V),
in der Z für 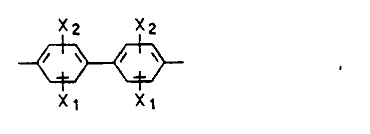 worin X₁ und X₂ unabhängig voneinander Wasserstoff, Chlor, Brom, Methoxy oder Methyl bedeuten und die Substituenten X₁ und X₂ symmetrisch angeordnet sind, und B für einen Rest der Kupplungskomponenten 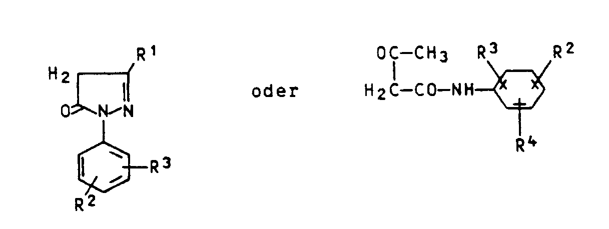 stehen, worin R¹ Methyl oder Carbo-C₁- bis C₄-alkoxy und R², R³ und R⁴ unabhängig voneinander Wasserstoff, Methyl, Methoxy oder Chlor bedeuten, enthaltend - bezogen auf das Disazopigment - 0,5 bis 20 Gew.% einer Disazoverbindung der allgemeinen Formel
A-N=N-Z-N=N-B (I),
in der Z und B die oben angegebene Bedeutung haben und A für einen Rest der Kupplungskomponenten 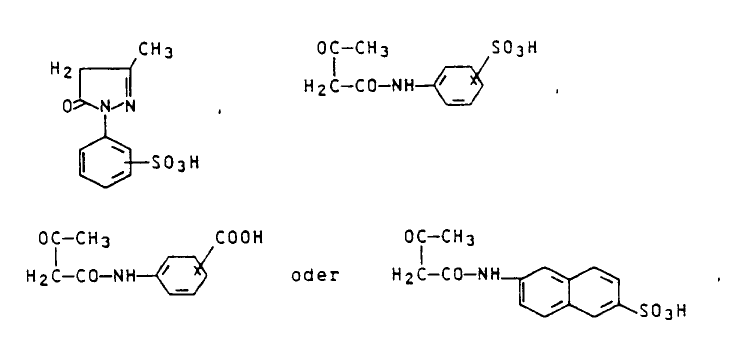 steht, wobei die Benzolreste und der Naphthalinrest gegebenenfalls durch Chlor, Methyl und/oder Methoxy substituiert sind und wobei der Anteil an der symmetrischen Disazoverbindung der Formel A-N=N-Z-N=N-A - bezogen auf (I) - ≦ 20 Gew.% ist.

11. Zubereitungen gemäß Anspruch 10, dadurch gekennzeichnet, daß Z für 3,3'-Dichlordiphenylen-4,4', B für den Rest eines Acetoacetanilids der Formel 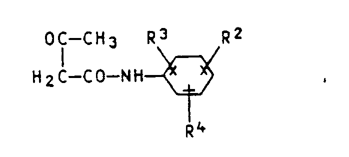 in der R², R³ und R⁴ unabhängig voneinander Wasserstoff, Methyl, Methoxy oder Chlor sind, und
A für einen Rest des 1(3'-Sulfophenyl)-3-methylpyrazol-5-ons, des 1(4'-Sulfophenyl)-3-methylpyrazol-5-ons, der Acetoacetaminobenzol-3-sulfonsäure oder der Acetoacetaminobenzol-4-sulfonsäure stehen.

## Claims

1. Disazo compounds based on 4,4'-diaminodiphenyl compounds, which contain not less than 80% by weight of a disazo compound of the formula
A-N=N-Z-N=N-B (I)
where Z is 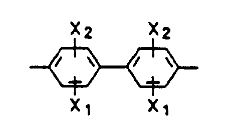 where X₁ and X₂ independently of one another are each hydrogen, chlorine, bromine, methoxy or methyl and are arranged symmetrically, A is a radical of a coupling component 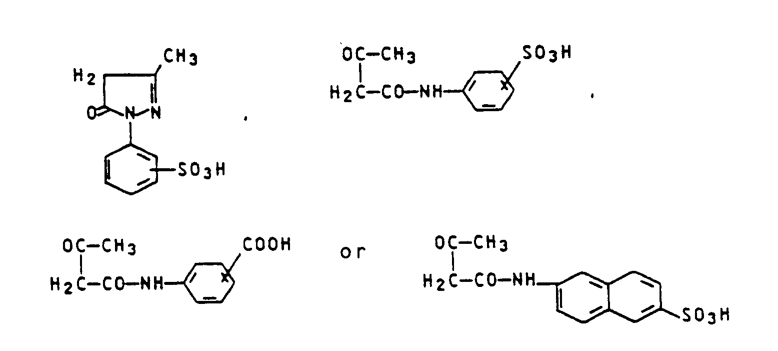 where the benzene radicals and the naphthalene radical are not further substituted or are additionally monosubstituted or disubstituted by chlorine, methyl and/or methoxy, and B is a radical of a coupling component 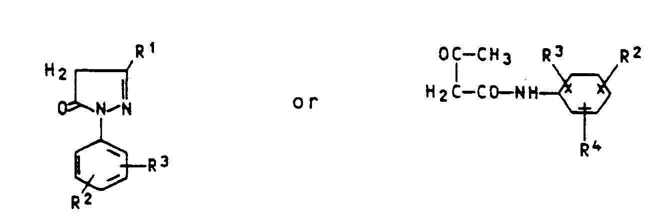 where R¹ is methyl or carbo-C₁-C₄-alkoxy and R², R³ and R⁴ independently of one another are each hydrogen, methyl, methoxy or chlorine.

2. A disazo compound as claimed in claim 1, wherein Z is 4,4'-(3,3'-dichlorodiphenylene), 4,4'-(3,3'-dimethoxydiphenylene), 4,4'-(3,3'-dimethyldiphenylene), 4,4'-(3,3',5,5'-tetrachlorodiphenylene) or 4,4'-(2,2',5,5'-tetrachlorodiphenylene).

3. A disazo compound as claimed in claim 1, wherein Z is 4,4'-(3,3'-dichlorodiphenylene).

4. A disazo compound as claimed in claim 1, 2 or 3, wherein A is derived from 1-(3'-sulfophenyl)-3-methylpyrazol-5-one, 1-(4'-sulfophenyl)-3-methylpyrazol-5-one, 1-(2'-chloro-4'-sulfophenyl)-3-methylpyrazol-5-one, 1-(2'-chloro-5'-sulfophenyl)-3-methylpyrazol-5-one, 1-(2',5'-dichloro-4'-sulfophenyl)-3-methylpyrazol-5-one, acetoacetaminobenzene-3-sulfonic acid, acetoacetaminobenzene-4-sulfonic acid, acetoacetamino-4-methylbenzene-2-sulfonic acid, acetoacetamino-4-methyl-5-chlorobenzene-2-sulfonic acid, acetoacetaminobenzene-3-carboxylic acid or acetoacetaminobenzene-4-carboxylic acid.

5. A disazo compound as claimed in claim 1, 2 or 3, wherein A is a radical of 1-(3'-sulfophenyl)-3-methylpyrazol-5-one, of 1-(4'-sulfophenyl)-3-methylpyrazol-5-one, of acetoacetaminobenzene-3-sulfonic acid or of acetoacetaminobenzene-4-sulfonic acid.

6. A disazo compound as claimed in claims 1 to 5, wherein B is derived from acetoacetanilide, acetoacet-o-toluidide, acetoacetamino-2,4-dimethylbenzene, acetoacetamino-2,5-dimethoxy-4-chlorobenzene, acetoacetamino-2-methoxybenzene, 1-phenyl-3-methylpyrazol-5-one, 1-(4'-methylphenyl)-3-methylpyrazol-5-one or 1-phenyl-3-carboethoxypyrazol-5-one.

7. A disazo compound as claimed in claims 1 to 5, wherein B is a radical of an acetoacetanilide of the formula 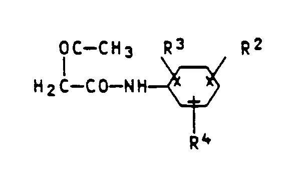 where R², R³ and R⁴ independently of one another are each hydrogen, methyl, methoxy or chlorine.

8. A disazo compound as claimed in claims 1 to 5, wherein B is derived from acetoacetanilide, acetoacet-o-toluidide,acetoacetamino-2,4-dimethylbenzene,acetoacetamino-2,5-dimethoxy-4-chlorobenzene or acetoacetamino-2-methoxybenzene.

9. Use of the bisdisazo compounds as claimed in claims 1 to 8 as additives to pigments for improving the transparency, the heat stability and the flow behavior of these pigments.

10. A formulation of disazo pigments of the formula
B-N=N-Z-N=N-B (V)
where Z is 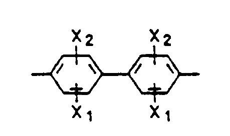 where X₁ and X₂ independently of one another are each hydrogen, chlorine, bromine, methoxy or methyl and are arranged symmetrically, and B is a radical of a coupling component 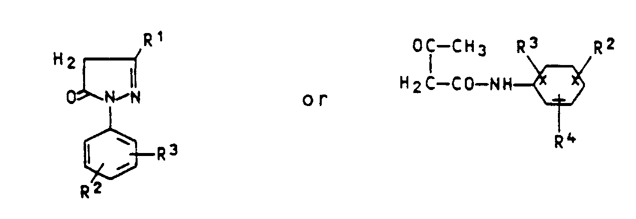 where R¹ is methyl or carbo-C₁-C₄-alkoxy and R², R³ and R⁴ independently of one another are each hydrogen, methyl, methoxy or chlorine, containing from 0.5 to 20% by weight, based on the disazo pigment, of a disazo compound of the formula
A-N=N-Z-N=N-B (I)
where Z and B have the above meanings and A is a radical of the coupling component 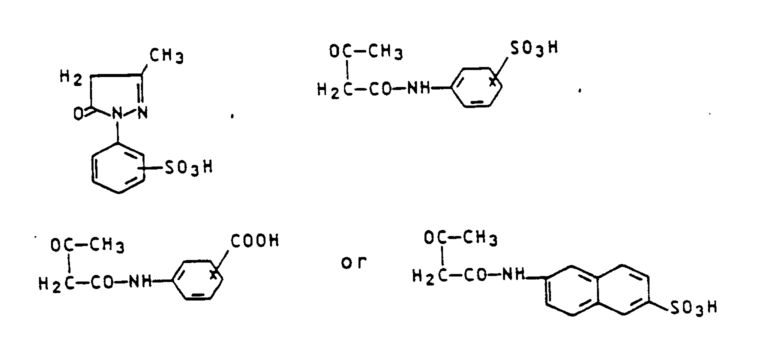 where the benzene radicals and the naphthalene radical are not further substituted or are additionally substituted by chlorine, methyl and/or methoxy, and the amount of the symmetric disazo compound of the formula A-N=N-Z-N=N-A is ≦ 20% by weight, based on (I).

11. A formulation as claimed in claim 10, wherein Z is 4,4'-(3,3'-dichlorodiphenylene), B is a radical of an acetoacetanilide of the formula 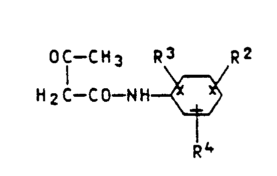 where R², R³ and R⁴ independently of one another are each hydrogen, methyl, methoxy or chlorine, and A is a radical of 1-(3'-sulfophenyl)-3-methylpyrazol-5-one, of 1-(4'-sulfophenyl)-3-methylpyrazol-5-one, of acetoacetaminobenzene-3-sulfonic acid or of acetoacetaminobenzene-4-sulfonic acid.

## Revendications

1. Composés disazoïques à base de composés 4,4'-diaminodiphényliques, qui contiennent au moins 80% en poids d'un composé disazoïque de formule générale
A-N=N-Z-N=N-B (I)
dans laquelle
Z est mis pour 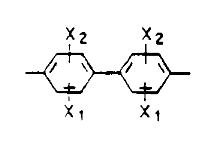 où X₁ et X₂ représentent chacun, indépendamment l'un de l'autre, un atome d'hydrogène, de chlore, de brome ou un reste méthoxy ou méthyle et les substituants X₁ et X₂ sont disposés symétriquement,
A est mis pour un reste des composants de copulation 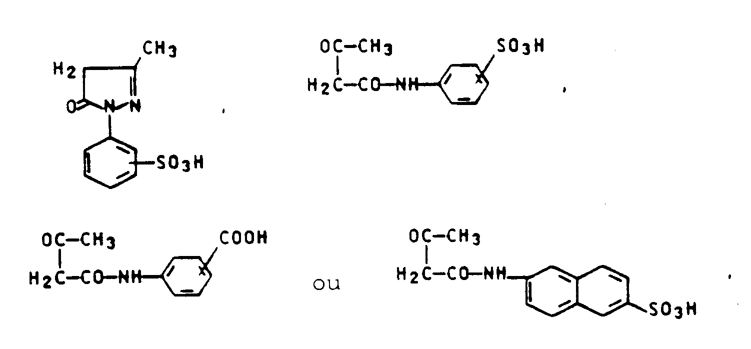 les restes benzène et le reste naphtalène étant éventuellement substitués une ou deux fois par des atomes de chlore, des restes méthyle et/ou des restes méthoxy, et
B est mis pour un reste des composants de copulation 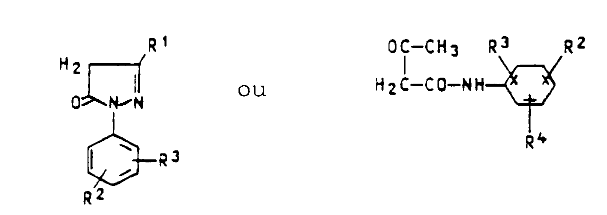 où R¹ représente un reste méthyle ou carbo(alcoxy en C₁-C₄) et R², R³ et R⁴ représentent chacun, indépendamment les uns des autres, un atome d'hydrogène, un reste méthyle, méthoxy ou un atome de chlore.

2. Composés disazoïques selon la revendication 1, caractérisés en ce que Z est mis pour un reste 3,3'-dichlorodiphénylène-4,4', 3,3'-diméthoxydiphénylène-4,4', 3,3'-dimethyldiphénylène-4,4', 3,3',5,5'-tétrachlorodiphénylène-4,4' ou 2,2',5,5'-tetrachlorodiphénylène-4,4'.

3. Composés disazoïques selon la revendication 1, caractérisés en ce que Z est mis pour un reste 3,3'-dichlorodiphénylène-4,4'.

4. Composés disazoïques selon l'une quelconque des revendications 1 à 3, caractérises en ce que A dérive de la 1-(3'-sulfophényl)-3-méthylpyrazole-5-one, de la 1-(4'-sulfophényl)-3-méthylpyrazole-5-one, de la 1-(2'-chloro-4'-sulfophényl)-3-méthylpyrazole-5-one, de la 1-(2'-chloro-5'-sulfophényl)-3-méthylpyrazole-5-one, de la 1-(2',5'-dichloro-4'-sulfophényl)-3-méthylpyrazole-5-one, de l'acide acétylacetaminobenzene-3-sulfonique, de l'acide acétylacetaminobenzene-4-sulfonique, de l'acide acétylacétamino-4-methylbenzène-2-sulfonique, de l'acide acétylacétamino-4-méthyl-5-chlorobenzène-2-sulfonique, de l'acide acetylacétaminobenzène-3-carboxylique ou de l'acide acétylacétaminobenzène-4-carboxylique.

5. Composés disazoïques selon l'une quelconque des revendications 1 à 3, caractérisés en ce que A est le reste de la 1-(3'-sulfophényl)-3-methylpyrazolone-5, de la 1-(4'-sulfophényl)-3-méthylpyrazolone-5, de l'acide acétylacétaminobenzène-3-sulfonique ou de l'acide acétylacétaminobenzène-4-sulfonique.

6. Composés disazoïques selon l'une quelconque des revendications 1 à 5, caractérises en ce que B dérive de l'acétylacétanilide, de l'acétylacéto-o-toluidide, de l'acétylacétamino-2,4-diméthylbenzène, de l'acétylacétamino-2,5-diméthoxy-4-chlorobenzène, de l'acétylacétamino-2-méthoxybenzène, de la 1-phényl-3-méthylpyrazole-5-one, de la 1-(4'-méthylphényl)-3-méthylpyrazole-5-one ou de la 1-phényl-3-carboéthoxypyrazole-5-one.

7. Composés disazoïques selon l'une quelconque des revendications 1 à 5, caractérisés en ce que B est le reste d'un acétylanilide de formule générale 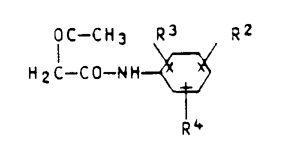 dans laquelle R², R³ et R⁴ représentent chacun, indépendamment les uns des autres, un atome d'hydrogène, un reste méthyle, méthoxy au un atome de chlore.

8. Composés disazoïques selon l'une quelconque des revendications 1 à 5, caractérisés en ce que B dérive de l'acetylacétanilide, de l'acétylacéto-o-toluidide, de l'acétylacétamino-2,4-diméthylbenzène, de l'acetylacétamino-2,5-diméthoxy-4-chlorobenzène ou de l'acétamino-2-méthoxybenzène.

9. Utilisation des composés disazoïques selon l'une quelconque des revendications 1 à 8 comme additifs à des pigments, afin d'améliorer la transparence, la stabilité à haute température et la fluidité de ces pigments.

10. Préparations de pigments disazoïques de formule générale
B-N=N-Z-N=N-B (V)
dans laquelle Z est mis pour 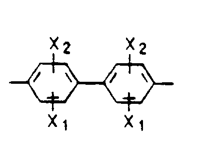 où X₁ et X₂ représentent chacun, indépendamment l'un de l'autre, un atome d'hydrogène, de chlore, de brome ou un reste méthoxy ou méthyle et les substituants X₁ et X₂ sont disposés symetriquement, et
B est mis pour un reste des composants de copulation 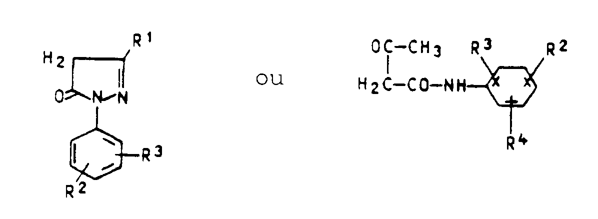 où R¹ représente un reste méthyle ou carbo-alcoxy en C₁-C₄ et R², R³ et R⁴ représentent chacun, indépendamment les uns des autres, un atome d'hydrogène, un reste méthyle, méthoxy ou un atome de chlore,
contenant - par rapport au pigment disazoïque - de 0,5 à 20% en poids d'un compose disazoïque de formule générale
A-N=N-Z-N=N-B (I)
dans laquelle Z et B ont les significations indiquées ci-dessus et A est mis pour un reste des composants de copulation 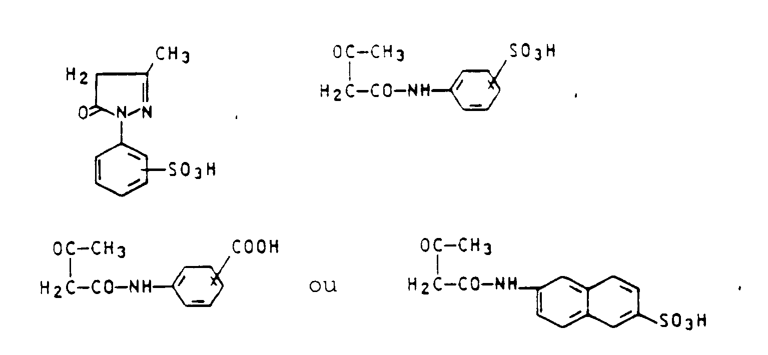 les restes benzène et le reste naphtalène étant éventuellement substitués par des atomes de chlore, des restes méthyle et/ou des restes méthoxy et la part du composé disazoïque symétrique de formule A-N=N-Z-N=N-A étant ≦ 20% en poids, par rapport à (I).

11. Préparations selon la revendication 10, caractérisées en ce que Z est mis pour un reste 3,3'-dichlorodiphénylène-4,4', B est mis pour le reste d'un acétylacétanilide de formule 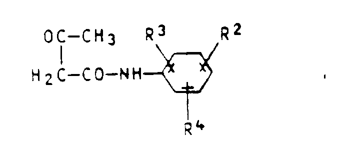 dans laquelle R², R³ et R⁴ sont chacun, indépendamment les uns des autres, un atome d'hydrogène, un reste méthyle, méthoxy ou un atome de chlore, et
A est mis pour un reste de la 1-(3'-sulfophényl)-3-méthylpyrazolone-5. de la 1-(4'-sulfophényl)-3-méthylpyrazolone-5, de l'acide acétylacétaminobenzène-3-sulfonique ou de l'acide acetylacétaminobenzène-4-sulfonique.
